# EUROPEAN PATENT APPLICATION

(11) **EP 4 471 341 A1**
(43) Date of publication of application: **04.12.2024**
(21) Application number: 22923755.7
(22) Date of filing: 25.01.2022
(51) Int. Cl.: F24F 7/08

(54) **VENTILATION DEVICE**

(71) Applicant: MITSUBISHI ELECTRIC CORPORATION, Chiyoda-ku Tokyo 100-8310 (JP)
(72) Inventor: KUWANA, Shingo, Tokyo 100-8310 (JP); YASUDA, Masami, Tokyo 100-8310 (JP)
(74) Representative: Mewburn Ellis LLP
(86) International application number: PCT/JP2022/002670
(87) International publication number: WO 2023/144886

(57) **Abstract**

A ventilation apparatus includes a supply air passage that allows a current of supply air to pass from outdoors in a direction of a room; an exhaust air passage that allows a current of exhaust air to pass outdoors from the room; an air supply blower installed in the supply air passage; an exhaust blower installed in the exhaust air passage; an air quality sensor that detects air quality of the room; and a control unit that controls air flow rates for the air supply blower and the exhaust blower. Upon receipt of an externally set instruction for an operation based on an air flow differential that is information indicating a difference between a specified supply air flow rate for the air supply blower and a specified exhaust air flow rate for the exhaust blower, for a first blower that is either the air supply blower or the exhaust blower, the control unit obtains a first air flow rate corresponding to an air quality level detected by the air quality sensor from air flow rate setting information establishing a relationship between the air quality level and the air flow rates and controls the first blower at the first air flow rate, and for a second blower different from the first blower, the control unit computes a second air flow rate by use of the first air flow rate for the first blower and the air flow differential and controls the second blower at the second air flow rate.

## Description

### Field

The present disclosure relates to a ventilation apparatus that performs ventilation based on a condition of indoor air.

### Background

Class 1 ventilation refers to ventilation by a ventilation apparatus with an air supply blower and an exhaust blower, involving introduction of outdoor air into a room through the air supply blower and discharge of indoor air out of the room through the exhaust blower. A heat exchange ventilation apparatus performs heat exchange between supply air and exhaust air, and when used for class 1 ventilation, allows for a reduction in energy being used by an air conditioner while ventilating.

For office buildings and the likes, the level of indoor air pollution greatly varies, corresponding to a fluctuating number of people in a room. The pollution of indoor air is generally represented by air quality. Examples of the air quality include concentration of a gas, such as carbon dioxide (CO₂) for which a maximum indoor level is provided, and concentration of dust, such as fine particulate matter, among others. As a general rule, ventilation for office buildings and the likes is designed so that with a room occupancy rate being 100%, the concentration of carbon dioxide in a room will be less than or equal to a certain value. However, according to studies from literature and others, an actual room occupancy rate mostly ranges from 60% to 70%.

In many cases, the heat exchange ventilation apparatus is used at a certain ventilation air volume fixed through a remote controller that is installed, for example, on a wall surface. Therefore, the indoor air pollution arises as a problem when there are many people in the room. Furthermore, excessive ventilation is performed during early morning and nighttime hours when only a small number of people or no person is present in the room, leading to an increased load on air conditioning, which is undesirable from the perspective of energy saving.

Therefore, a heat exchange ventilation apparatus disclosed in Patent Literature 1 includes a carbon dioxide sensor that detects carbon dioxide in a room and performs control that sets, among a supply air flow rate and an exhaust air flow rate, at least the exhaust air flow rate at either a first notch for a higher flow rate or a second notch for a lower flow rate on the basis of the concentration of carbon dioxide in the room.

The heat exchange ventilation apparatus typically includes, for ventilation, air passages connecting the heat exchange ventilation apparatus to a room and to an outdoor place via ducts. In addition, there are cases where the duct branches out to connect to plural rooms along the way and cases where the duct is a single larger duct where plural ducts converge.

These air passages that use the ducts can experience various pressure losses associated with distance between the heat exchange ventilation apparatus and the room, distance between the heat exchange ventilation apparatus and the outdoor place, duct diameter, a bend count, and connected members, such as grills or hoods, among others. For this reason, there often exists a difference in magnitude of pressure loss between a supply air passage through which outdoor air is supplied into the room and an exhaust air passage through which indoor air is discharged outdoors.

Therefore, independently changing outputs for the air supply blower and the exhaust blower to outputs of choice by an installer or a user in accordance with an instruction from the installer or the user is desirable for the heat exchange ventilation apparatus in enabling independent adjustments to a supply air flow rate of choice and an exhaust air flow rate of choice. The installer or the user is hereinafter referred to as the user or the like. Such a heat exchange ventilation apparatus enables the user or the like to adjust the supply air flow rate and the exhaust air flow rate to the same air flow rate even if there exists the above-mentioned difference in the magnitude of pressure loss between the supply air passage and the exhaust air passage. Furthermore, an intentional imbalance between the supply air flow rate and the exhaust air flow rate allows for a deliberately positive or negative pressure in the room, enabling ventilation tailored to a use for the room.

### Citation List

### Patent Literature

Patent Literature 1: Japanese Patent Application Laid-open No. H9-159208

### Summary of Invention

### Problem to be solved by the Invention

The technique described in Patent Literature 1 enables the control that changes the notch for the exhaust air flow rate on the basis of the carbon dioxide concentration, with the supply air flow rate remaining fixed; however, the supply air flow rate cannot be changed in this case. In other words, a problem with the technique described in Patent Literature 1 is that a supply air flow rate of choice and an exhaust air flow rate of choice cannot be set independently. Even if the technique described in Patent Literature 1 enables the supply air flow rate of choice and the exhaust air flow rate of choice to be set independently, a problem with the technique is that a relationship between the set supply air flow rate of choice and the set exhaust air flow rate of choice cannot be maintained because a carbon dioxide concentration-based changeover is made to the predefined exhaust air flow rate. This problem also arises when a supply air flow rate of choice and an exhaust air flow rate of choice are set in a case where a level of some air quality other than the carbon dioxide concentration is based on.

The present disclosure has been made in view of the above, and an object of the present disclosure is to obtain a ventilation apparatus that enables a user or the like to independently set a supply air flow rate of choice and an exhaust air flow rate of choice and allows for supply and exhaust air flow rate control based on an air quality level, with a relationship between the set supply air flow rate of choice and the set exhaust air flow rate of choice maintained.

### Means to Solve the Problem

In order to solve the above problems and to achieve the object, a ventilation apparatus according to the present disclosure includes a supply air passage to allow a current of supply air to pass as a current of outdoor air in a direction of a room, an exhaust air passage to allow a current of exhaust air to pass outdoors as a current of air from the room, an air supply blower installed in the supply air passage, an exhaust blower installed in the exhaust air passage, an air quality sensor to detect air quality indicative of how much indoor air is polluted, and a control unit to control air flow rates for the air supply blower and the exhaust blower. Upon receipt of an externally set instruction for an operation based on an air flow differential that is information indicating a difference between a specified supply air flow rate as a specified air flow rate for the air supply blower and a specified exhaust air flow rate as a specified air flow rate for the exhaust blower, for a first blower that is either the air supply blower or the exhaust blower, the control unit obtains a first air flow rate corresponding to an air quality level detected by the air quality sensor from air flow rate setting information establishing a relationship between the air quality level and the air flow rates and controls the first blower at the first air flow rate, and for a second blower different from the first blower, the control unit computes a second air flow rate by use of the first air flow rate for the first blower and the air flow differential and controls the second blower at the second air flow rate.

### Effects of the Invention

The ventilation apparatus according to the present disclosure has effects of enabling a user or the like to independently set a supply air flow rate of choice and an exhaust air flow rate of choice and allowing for the supply and exhaust air flow rate control based on the air quality level, with a relationship between the set supply air flow rate of choice and the set exhaust air flow rate of choice maintained.

### Brief Description of Drawings

FIG. 1 is a sectional view schematically illustrating a configuration example of a ventilation apparatus according to a first embodiment.
FIG. 2 is a perspective view illustrating a configuration example of a heat exchange element.
FIG. 3 is a block diagram exemplifying a hardware configuration of a remote controller provided for the ventilation apparatus according to the first embodiment.
FIG. 4 is a block diagram exemplifying a functional configuration of a control unit provided for the ventilation apparatus according to the first embodiment.
FIG. 5 is a diagram illustrating an example of air flow rate setting information.
FIG. 6 is a diagram illustrating an example of an upper-limit switching threshold and an example of a lower-limit switching threshold.
FIG. 7 is a diagram illustrating an example of a relationship among a supply air flow rate, an exhaust air flow rate, an air flow rate difference, and carbon dioxide concentration.
FIG. 8 is a diagram illustrating the example relationship among the supply air flow rate, the exhaust air flow rate, and the carbon dioxide concentration in the presence of an air flow differential.
FIG. 9 is a diagram illustrating an example of the relationship among the supply air flow rate, the exhaust air flow rate, the air flow rate difference, and the carbon dioxide concentration.
FIG. 10 is a diagram illustrating the example relationship among the supply air flow rate, the exhaust air flow rate, and the carbon dioxide concentration in the presence of an air flow differential.
FIG. 11 is a diagram illustrating an example of the air flow rate setting information.
FIG. 12 is a diagram illustrating the example air flow rate setting information.
FIG. 13 is a diagram illustrating the example air flow rate setting information.
FIG. 14 is a diagram illustrating example supply and exhaust air flow rate setting and example air flow rate differences in an air flow rate reduction preference mode.
FIG. 15 is a diagram illustrating an example relationship among the supply air flow rate, the exhaust air flow rate, and the carbon dioxide concentration in the air flow rate reduction preference mode.
FIG. 16 is a block diagram exemplifying a hardware configuration of the control unit provided for the ventilation apparatus according to the first embodiment.
FIG. 17 is a flowchart exemplifying a procedure of an air flow rate control method for the ventilation apparatus in a case where the air flow rate reduction preference mode is selected.
FIG. 18 is a flowchart exemplifying a procedure of an air flow rate control method for the ventilation apparatus in a case where an air flow differentiation preference mode is selected.
FIG. 19 is a flowchart exemplifying a procedure of an automatic air volume control mode-related control process.
FIG. 20 is a diagram illustrating an example of the air flow rate setting information before the automatic air volume control mode is implemented.
FIG. 21 is a diagram illustrating the example air flow rate setting information when the automatic air volume control mode is implemented.
FIG. 22 is a diagram illustrating an example relationship among the carbon dioxide concentration, the supply air flow rate, and the exhaust air flow rate, with the air flow differential expressed as a ratio of the supply air flow rate to the exhaust air flow rate.
FIG. 23 is a diagram illustrating the example relationship among the supply air flow rate, the exhaust air flow rate, and the carbon dioxide concentration in the presence of the air flow differential.
FIG. 24 is a sectional view schematically illustrating a configuration example of a ventilation apparatus according to a third embodiment.

### Description of Embodiments

With reference to the drawings, a detailed description is hereinafter provided of ventilation apparatuses according to embodiments of the present invention.

### First Embodiment.

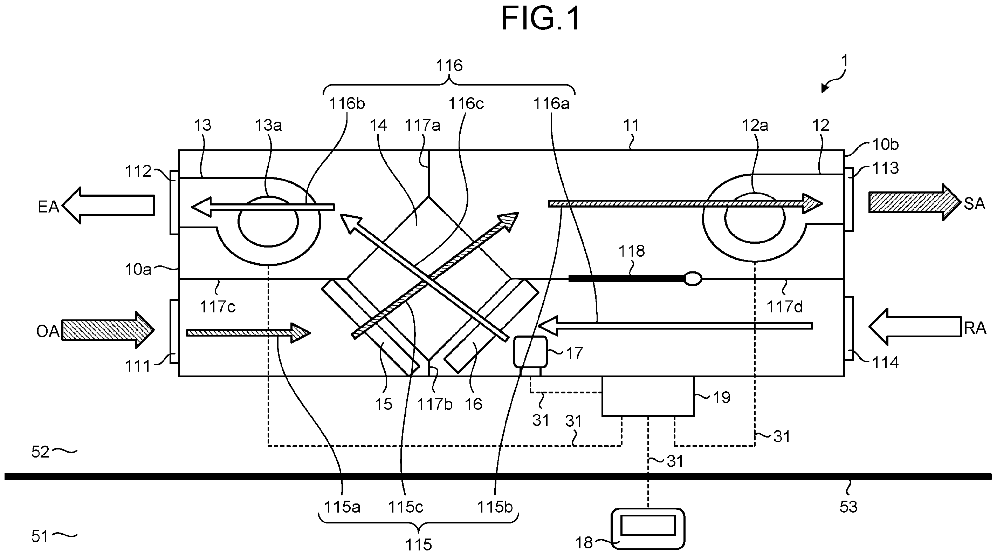

FIG. 1 is a sectional view schematically illustrating a configuration example of a ventilation apparatus according to a first embodiment. The ventilation apparatus 1 includes a housing 11, an air supply blower 12, an exhaust blower 13, a heat exchange element 14, a supply air filter 15, an exhaust air filter 16, a carbon dioxide sensor 17, a remote controller 18, and a control unit 19.

The housing 11 is a box-like structure serving as an outer enclosure of the ventilation apparatus 1. The housing 11 has the shape of, for example, a rectangular parallelepiped. The housing 11 is constructed of, for example, sheet metal. The housing 11 is installed in a ceiling space 52, being in a hidden state. In FIG. 1, a room 51 is a target of ventilation, and an area above a ceiling 53 of the room 51 is the ceiling space 52 where the housing 11 is installed. Air in the room 51 is hereinafter referred to as the indoor air.

The housing 11 includes an outdoor-air inlet 111 and an exhaust air outlet 112 in one longitudinal end face 10a of the housing 11. The housing 11 includes a supply air outlet 113 and an indoor-air inlet 114 in a longitudinal end face 10b of the housing 11 that is opposite from the one end face 10a. The outdoor-air inlet 111 is an opening through which outdoor air (OA), which is outside air, is taken into the housing 11. The supply air outlet 113 is an opening through which the outdoor air is discharged out of the housing 11. The air discharged from the supply air outlet 113 to be introduced into the room 51 is also referred to as the supply air (SA). The indoor-air inlet 114 is an opening through which the air in the room 51 is drawn or taken into the housing 11. The air taken in from the indoor-air inlet 114 is also referred to as the return air (RA). The exhaust air outlet 112 is an opening through which the return air is discharged out of the housing 11. The air discharged from the exhaust air outlet 112 is also referred to as the exhaust air (EA).

The housing 11 internally includes a supply air passage 115 and an exhaust air passage 116. The supply air passage 115 is an air passage that connects the outdoor-air inlet 111 and the supply air outlet 113, allowing a current of supply air that is a current of outdoor air produced by the air supply blower 12 to pass in a direction of the room 51. In other words, the supply air passage 115 is the air passage for the outdoor air OA to be supplied into the room 51. The supply air passage 115 includes a pre-heat exchange outdoor-air passage 115a formed between the outdoor-air inlet 111 and the heat exchange element 14, a post-heat exchange outdoor-air passage 115b formed between the heat exchange element 14 and the supply air outlet 113, and in-element supply air passages 115c that are supply air passages in the heat exchange element 14.

The exhaust air passage 116 is an air passage that connects the indoor-air inlet 114 and the exhaust air outlet 112, allowing a current of exhaust air that is a current of air produced by the exhaust blower 13 to pass outdoors from the room 51. In other words, the exhaust air passage 116 is the air passage for the return air RA, which is the indoor air, to be discharged outdoors. The exhaust air passage 116 includes a pre-heat exchange indoor-air passage 116a formed between the indoor-air inlet 114 and the heat exchange element 14, a post-heat exchange indoor-air passage 116b formed between the heat exchange element 14 and the exhaust air outlet 112, and in-element exhaust air passages 116c that are exhaust air passages in the heat exchange element 14. The supply air passage 115 and the exhaust air passage 116 intersect at the heat exchange element 14.

The housing 11 internally includes partition walls 117a, 117b, 117c, and 117d that divide the supply air passage 115 from the exhaust air passage 116. Inside the housing 11, the supply air passage 115 and the exhaust air passage 116 are separated by the heat exchange element 14 and the partition walls 117a, 117b, 117c, and 117d. Specifically, the post-heat exchange outdoor-air passage 115b and the post-heat exchange indoor-air passage 116b are separated by the heat exchange element 14 and the partition wall 117a. The pre-heat exchange outdoor-air passage 115a and the pre-heat exchange indoor-air passage 116a are separated by the heat exchange element 14 and the partition wall 117b. The pre-heat exchange outdoor-air passage 115a and the post-heat exchange indoor-air passage 116b are separated by the heat exchange element 14 and the partition wall 117c. The post-heat exchange outdoor-air passage 115b and the pre-heat exchange indoor-air passage 116a are separated by the heat exchange element 14 and the partition wall 117d.

The housing 11 includes an air passage switching damper 118 that is an opening and closing unit for opening and closing an opening in the partition wall 117d. The opening provides communication between a region upstream of the air supply blower 12 in the post-heat exchange outdoor-air passage 115b-that is to say, the region between the heat exchange element 14 and the air supply blower 12 in the post-heat exchange outdoor-air passage 115b-and the pre-heat exchange indoor-air passage 116a.

The air supply blower 12 is installed in the supply air passage 115 and produces a current of supply air. In the example of FIG. 1, the air supply blower 12 is connected to the supply air outlet 113 in the post-heat exchange outdoor-air passage 115b. The air supply blower 12 internally includes an air supply motor 12a that drives the air supply blower 12.

The exhaust blower 13 is installed in the exhaust air passage 116 and produces a current of exhaust air. In the example of FIG. 1, the exhaust blower 13 is connected to the exhaust air outlet 112 in the post-heat exchange indoor-air passage 116b. The exhaust blower 13 internally includes an exhaust motor 13a that drives the exhaust blower 13.

The air supply motor 12a and the exhaust motor 13a change their respective rotational speeds correspondingly to controls by the control unit 19, which is described later.

The heat exchange element 14 is installed between the supply air passage 115 and the exhaust air passage 116 and performs continuous heat exchange between the current of supply air and the current of exhaust air. The heat exchange element 14 may be a sensible heat exchanger that performs sensible heat exchange, that is to say, temperature exchange between the current of supply air and the current of exhaust air. The heat exchange element 14 may be a total heat exchanger that performs sensible and latent heat exchange, that is to say, temperature and moisture exchange between the current of supply air and the current of exhaust air. In the example given here, the heat exchange element 14 is the total heat exchanger.

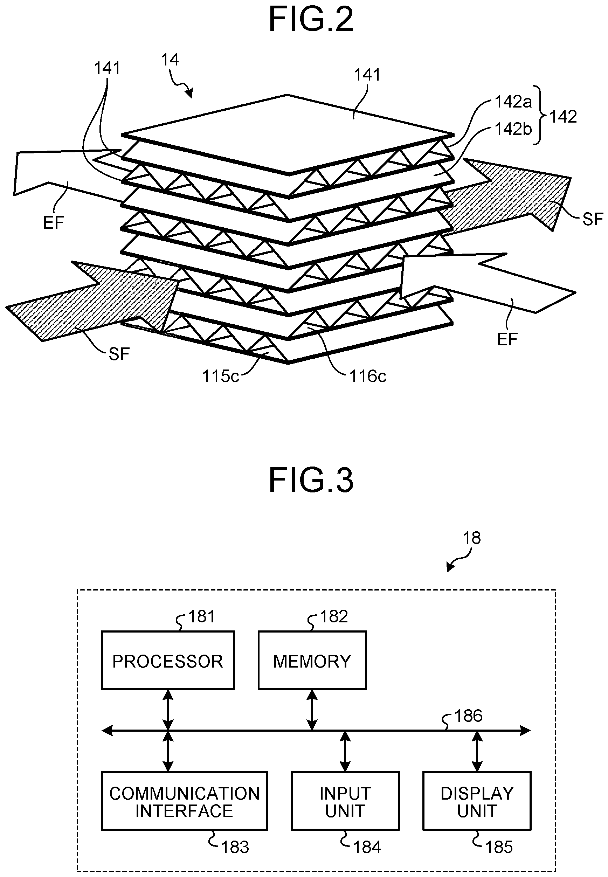

FIG. 2 is a perspective view illustrating a configuration example of the heat exchange element. The heat exchange element 14 includes plural sheet members 141 stacked at intervals and spacing members 142 maintaining the spacing of the plural sheet members 141. The heat exchange element 14 is a stack formed by stacking the sheet members 141 and the spacing members 142 together. The sheet members 141 are flat sheet-shaped members. The spacing members 142 are sheet-like members with corrugated irregularities. The sheet members 141 are joined to the spacing members 142. In other words, the heat exchange element 14 is the stack formed by stacking corrugated sheets that each have the spacing member 142 bonded to the sheet member 141.

The spacing members 142 include spacing members 142a and 142b that are differently oriented, with directions of their respective corrugations intersecting each other. The directions of the respective corrugations of the spacing members 142a and 142b illustrated here are orthogonal to each other. The spacing members 142a and the spacing members 142b are alternately disposed in a stacking direction. Spaces formed between the spacing members 142b and the sheet members 141 are the in-element supply air passages 115c through which the current of supply air SF passes. Spaces formed between the spacing members 142a and the sheet members 141 are the in-element exhaust air passages 116c through which the current of exhaust air EF passes. The heat exchange element 14 is formed with the plural in-element supply air passages 115c and the plural in-element exhaust air passages 116c.

The spacing members 142b, which define the in-element supply air passages 115c, and the spacing members 142a, which define the in-element exhaust air passages 116c, are alternately stacked via the sheet members 141 in a thickness direction of the sheet members 141, making the in-element supply air passages 115c independent of the in-element exhaust air passages 116c. With this arrangement, the heat exchange element 14 is capable of total heat exchange, that is to say, the temperature and moisture exchange between the air flowing through the in-element supply air passages 115c of the supply air passage 115 and the air flowing through the in-element exhaust air passages 116c of the exhaust air passage 116.

A return is made to FIG. 1. The supply air filter 15 is installed upstream of the heat exchange element 14 in the supply air passage 115, namely in the pre-heat exchange outdoor-air passage 115a. The supply air filter 15 is an air filter that removes dust from the outdoor air OA, which is drawn into the heat exchange element 14, for preventing performance deterioration of the heat exchange element 14 that might be caused by clogging of the dust included in the outdoor air OA. The supply air filter 15 is detachably installed in the pre-heat exchange outdoor-air passage 115a.

The exhaust air filter 16 is installed upstream of the heat exchange element 14 in the exhaust air passage 116, namely in the pre-heat exchange indoor-air passage 116a. The exhaust air filter 16 is an air filter that removes dust from the return air RA, which is drawn into the heat exchange element 14, for preventing performance deterioration of the heat exchange element 14 that might be caused by clogging of the dust included in the return air RA. The exhaust air filter 16 is detachably installed in the pre-heat exchange indoor-air passage 116a.

The carbon dioxide sensor 17 is a sensor that detects concentration of carbon dioxide (CO₂) in the room 51 and is installed in the exhaust air passage 116. The carbon dioxide sensor 17 is an example of an air quality sensor that detects air quality indicative of how much the indoor air is polluted. In the example, the carbon dioxide sensor 17 is installed upstream of the heat exchange element 14 in the exhaust air passage 116, namely in the pre-heat exchange indoor-air passage 116a. In the first embodiment, the carbon dioxide concentration of the return air RA, which is the indoor air flowing through the pre-heat exchange indoor-air passage 116a, is detected thus, resulting in the detection of the carbon dioxide concentration in the room 51. The carbon dioxide concentration detected by the carbon dioxide sensor 17 is input to the control unit 19 via a communication line 31.

The remote controller 18 is an example of an external device that instructs the control unit 19 on settings that are made by a user or the like with respect to the ventilation of the room 51 for which the ventilation apparatus 1 is provided. The remote controller 18 is hereinafter referred to as the remote. The remote 18 is connected to the control unit 19 via a wired or wireless communication line 31.

The remote 18 receives instructions regarding various controls, including controls of ventilation operations of the ventilation apparatus 1. The remote 18 transmits the various instructions received from the user or the like to the control unit 19. In the example, the remote 18 allows for operation settings in the ventilation apparatus 1, including operational on-off switching, ventilation air volume switching, ventilation mode switching, and operation timer setting, among others. In the first embodiment, the remote 18 also allows for setting of air flow differentiation that sets a difference in air flow rate between the air supply blower 12 and the exhaust blower 13 of the ventilation apparatus 1. The air flow differentiation setting involves setting a pair of specified air flow rates that is a combination of specified values for a supply air flow rate and an exhaust air flow rate at an air volume point of choice and selecting a blower that is to have a differentiated air flow rate. The pair of specified air flow rates may be replaced by an air flow differential that is a difference between the specified air flow rates for the air supply blower 12 and the exhaust blower 13 at the air volume point of choice. Instead of the blower that is to have the differentiated air flow rate, a reference blower may be selected. The reference blower refers to the blower different from the blower that is to have the differentiated air flow rate, being either the air supply blower 12 or the exhaust blower 13. A description of an instruction for the air flow differentiation setting is provided later. In the first embodiment, ventilation modes include a fixed air volume mode in which ventilation is performed at an air volume of choice and an automatic air volume control mode in which automatic ventilation air volume switching is performed on the basis of the concentration of carbon dioxide in the indoor air.

FIG. 3 is a block diagram exemplifying a hardware configuration of the remote provided for the ventilation apparatus according to the first embodiment. The remote 18 includes a processor 181, a memory 182, a communication interface 183, an input unit 184, and a display unit 185. The processor 181, the memory 182, the communication interface 183, the input unit 184, and the display unit 185 are connected via a bus 186.

The processor 181 is a central processing unit (CPU). The processor 181 may be a processing unit, an arithmetic unit, a microprocessor, a microcomputer, or a digital signal processor (DSP). The functions of the remote 18 are implemented with the processor 181 and software, firmware, or a combination of software and firmware. The software or the firmware is described as programs and is stored in the memory 182, which is a built-in memory.

The memory 182 is a nonvolatile or volatile semiconductor memory, such as a random-access memory (RAM), a read-only memory (ROM), a flash memory, an erasable programmable read-only memory (EPROM), or an electrically erasable programmable read-only memory (EEPROM) (registered trademark). The memory 182 to be used is preferably a nonvolatile memory that prevents stored information from being erased even when power to the ventilation apparatus 1 is cut off.

The communication interface 183 is an interface for connection between the remote 18 and an external device that refers to the control unit 19 in this case. The communication interface 183 transmits and receives information to and from the remote 18.

The input unit 184 is an input interface for the user or the like. The display unit 185 is a display device that shows information to the user or the like. The operation settings and the air flow differentiation setting are done by the user's operation through the input unit 184. In the air flow differentiation setting, the blower that is to have the differentiated air flow rate is selected, and a pair of specified air flow rates is set. The display unit 185 is, for example, a liquid crystal display (LCD).

A return is made to FIG. 1. In accordance with an instruction from the remote 18, the control unit 19 controls ventilation operation by performing operation control on the air supply and exhaust blowers 12 and 13, which are connected to the control unit 19 via communication lines 31. In an example case where the control unit 19 receives, from the remote 18, an instruction for an operation in the fixed air volume mode, which is the ventilation mode where ventilation is performed at a fixed air volume, the control unit 19 operates the air supply blower 12 and the exhaust blower 13 to achieve a specified air volume. In another example case where the control unit 19 receives, from the remote 18, an instruction for an operation in the automatic air volume control mode where the ventilation air volume is switched on the basis of the carbon dioxide concentration in the room 51, the control unit 19 operates the air supply blower 12 and the exhaust blower 13 to achieve a supply and an exhaust air flow rates corresponding to a carbon dioxide level detected by the carbon dioxide sensor 17. When an instruction for the air flow differentiation setting is received from the remote 18 in these cases, as per the instruction, the blower that is to have the differentiated air flow rate is set to an air flow rate that has taken into consideration the air flow differential in relation to the air flow rate for the reference blower.

Specifically, upon receiving an instruction for an operation based on the air flow differential, which is information indicating the difference between the specified supply air flow rate as the specified air flow rate for the air supply blower 12 and the specified exhaust air flow rate as the specified air flow rate for the exhaust blower 13, the control unit 19 sets the blower that is to have the differentiated air flow rate to an air flow rate that has taken into consideration the air flow differential in relation to the air flow rate for the reference blower. The control unit 19 obtains, for the reference blower, which is either the air supply blower 12 or the exhaust blower 13, a first air flow rate corresponding to the carbon dioxide level detected by the carbon dioxide sensor 17 from air flow rate setting information establishing a relationship between the carbon dioxide level, which is a predefined air quality level, and the air flow rates and controls the reference blower at the first air flow rate. The control unit 19 computes, using the first air flow rate for the reference blower and the air flow differential, a second air flow rate for the blower that is to have the differentiated air flow rate, not the reference blower, and controls the blower that is to have the differentiated air flow rate at the second air flow rate. The reference blower corresponds to a first blower, and the blower that is to have the air flow differential corresponds to a second blower.

As illustrated in FIG. 1, installing the carbon dioxide sensor 17 inside the housing 11 and the control unit 19 near the housing 11 enables the communication line 31 that connects the carbon dioxide sensor 17 and the control unit 19 to be shorter, allowing for reduced construction costs.

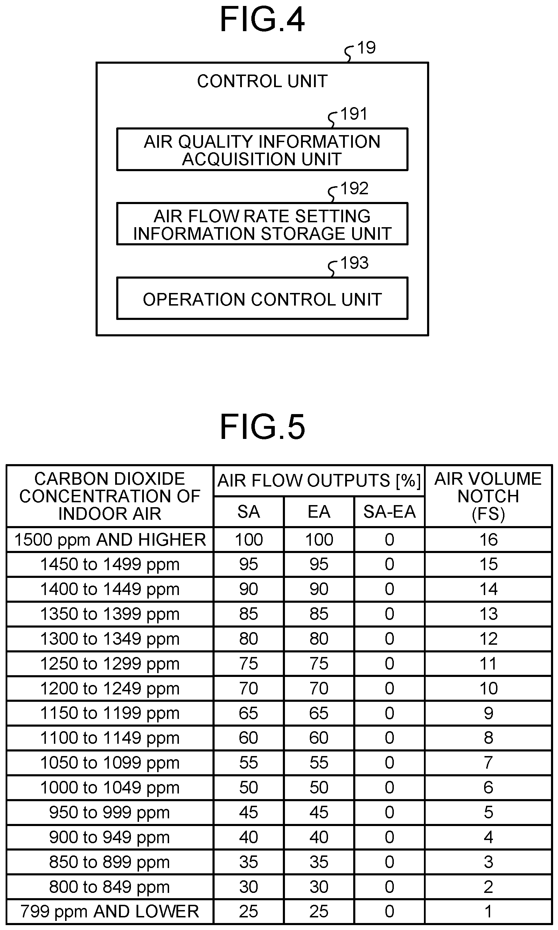

A detailed description is provided of functions of the control unit 19. FIG. 4 is a block diagram exemplifying a functional configuration of the control unit provided for the ventilation apparatus according to the first embodiment. The control unit 19 includes an air quality information acquisition unit 191, an air flow rate setting information storage unit 192, and an operation control unit 193.

The air quality information acquisition unit 191 obtains the carbon dioxide level, which is an air quality level of the indoor air to be involved in ventilation, from the carbon dioxide sensor 17 and outputs the carbon dioxide level to the operation control unit 193.

The air flow rate setting information storage unit 192 stores the air flow rate setting information. The air flow rate setting information includes information indicating the relationship between the carbon dioxide concentration and the air flow rates for the air supply blower 12 and the exhaust blower 13. The air flow rate setting information may include upper-limit and lower-limit air flow rates for the air supply blower 12 and the exhaust blower 13. When operating the ventilation apparatus 1 in the fixed air volume mode, the operation control unit 193 refers to the air flow rate setting information for air flow rates for the air supply and exhaust blowers 12 and 13 that correspond to an instruction. When operating the ventilation apparatus 1 in the automatic air volume control mode, the operation control unit 193 refers to the air flow rate setting information for an air flow rate for the reference blower.

Typically, air flow outputs for the air supply and exhaust blowers 12 and 13 are set to become greater as the carbon dioxide concentration, which is one example of the air quality, increases for ensuring that the air quality level in the room 51 is less than or equal to a provided standard value. FIG. 5 is a diagram illustrating an example of the air flow rate setting information. The air flow rate setting information is information where the carbon dioxide concentration of the indoor air, the air flow outputs for the blowers, and an air volume notch are associated with each other. There are 16 divided stages for the carbon dioxide concentration in this information, with air flow outputs for the air supply and exhaust blowers 12 and 13 set for each stage of carbon dioxide concentration. In this figure, the air flow outputs are each expressed as an output proportion when a maximum output for each of the air supply and exhaust blowers 12 and 13 is 100%. In this figure, "SA" represents the air flow output for the air supply blower 12, and "EA" represents the air flow output for the exhaust blower 13. Furthermore, "SA-EA" represents an air flow rate difference, that is to say, a difference between the air flow output for the air supply blower 12 and the air flow output for the exhaust blower 13. However, FIG. 5 illustrates a case where air flow rate differences are "0".

According to the example of FIG. 5, the ventilation apparatus 1 is operable at 16 air volume levels ranging from fan speed (FS) 1 corresponding to a notch where the ventilation apparatus 1 is operated at a lowest air volume to FS 16 corresponding to a notch where the ventilation apparatus 1 is operated at a highest air volume. Since FIG. 5 illustrates the example, air volume notches may be a number of levels other than 16 levels.

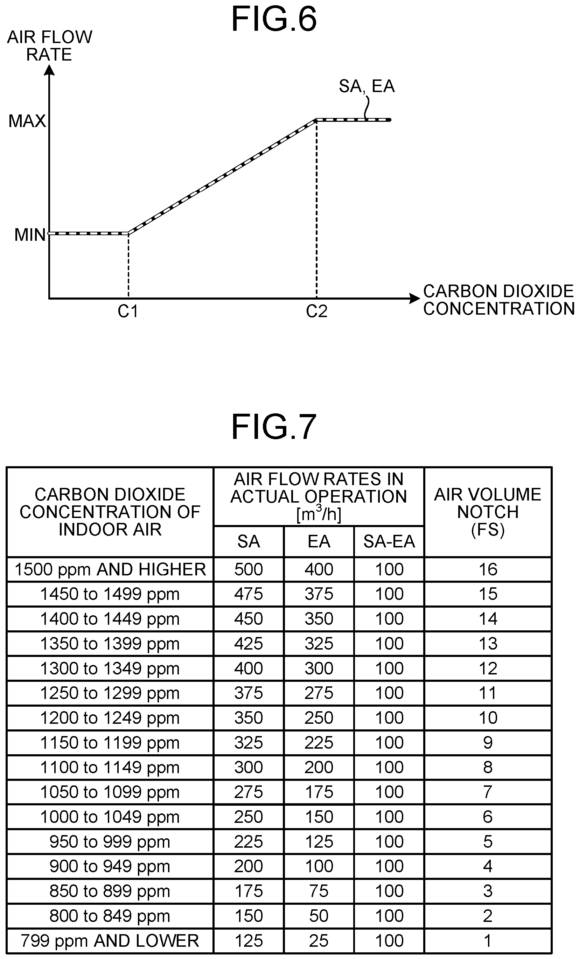

The operation control unit 193 is prestored with "an upper-limit switching threshold" and "a lower-limit switching threshold" as predetermined "switching thresholds" that the operation control unit 193 uses to determine whether to change the ventilation air volume of the ventilation apparatus 1 or not. The upper-limit switching threshold serves as an upper limit for the ventilation air volume, meaning that even when the carbon dioxide concentration becomes greater than or equal to this value, the ventilation air volume remains unchanged. The lower-limit switching threshold serves as a lower limit for the ventilation air volume, meaning that even when the carbon dioxide concentration becomes less than or equal to this value, the ventilation air volume remains unchanged. FIG. 6 is a diagram illustrating an example of the upper-limit switching threshold and an example of the lower-limit switching threshold. In this drawing, a horizontal axis represents the carbon dioxide concentration, and a vertical axis represents the air flow rates for the air supply blower 12 and the exhaust blower 13. FIG. 6 illustrates the air flow rate setting information of FIG. 5 in graph form. An air flow rate curve for the air supply blower 12 is represented by SA, and an air flow rate curve for the exhaust blower 13 is represented by EA. As illustrated in FIG. 6, with the carbon dioxide concentration being less than or equal to C1, the air flow rates remain constant at a minimum value of "min". With the carbon dioxide concentration being greater than or equal to C2, the air flow rates remain constant at a maximum value of "max". C1 is the lower-limit switching threshold, and C2 is the upper-limit switching threshold. Between C1 and C2, stepwise switching thresholds are set so that the air flow rates increase from the minimum value to the maximum value.

As illustrated in FIG. 5, the switching thresholds for the 16-level air volume notches can be set through division of a difference between the upper-limit switching threshold and the lower-limit switching threshold into 15 equal parts. In other words, the control unit 19 is capable of stepwise ventilation air volume switching for the ventilation apparatus 1 by using the plural thresholds indicating different carbon dioxide concentrations of the indoor air.

The upper-limit switching threshold and the lower-limit switching threshold may be stored in the air flow rate setting information of the air flow rate setting information storage unit 192. The upper-limit switching threshold and the lower-limit switching threshold can be changed to values of choice through the external device, such as the remote 18, to be adapted to an environment in which the ventilation apparatus 1 is installed, when necessary. When changed, the upper-limit switching threshold and the lower-limit switching threshold are overwritten by the air flow rate setting information storage unit 192.

A return is made to FIG. 4. The operation control unit 193 receives a setting instruction regarding the ventilation apparatus 1 from the remote 18 and performs operation control on the air supply and exhaust blowers 12 and 13 according to the setting instruction. As mentioned above, the ventilation modes include the fixed air volume mode and the automatic air volume control mode. Therefore, an overview of each of the modes is provided.

The fixed air volume mode is implemented when an instruction for the fixed air volume mode is received from the remote 18. The instruction includes one of the 16-level air volume notches illustrated in FIG. 5. The operation control unit 193 obtains, from the air flow rate setting information, the supply air flow rate and the exhaust air flow rate that correspond to the air volume notch included in the instruction and performs control that causes the air supply blower 12 and the exhaust blower 13 to operate at the obtained supply and exhaust air flow rates.

The automatic air volume control mode is implemented when an instruction for the automatic air volume control mode is received from the remote 18. When the automatic air volume control mode is selected without the air flow differentiation setting, the operation control unit 193 obtains, from the air flow rate setting information, the supply air flow rate and the exhaust air flow rate that correspond to the indoor air's carbon dioxide level detected by the carbon dioxide sensor 17 and controls the air supply blower 12 and the exhaust blower 13 on the basis of the obtained supply and exhaust air flow rates. In other words, on the basis of the air flow rate setting information, the operation control unit 193 controls the air supply and exhaust blowers 12 and 13 at the air flow rates corresponding to the carbon dioxide level, which is a detection result of the carbon dioxide sensor 17.

When the air flow differentiation setting is made through the remote 18, the operation control unit 193 performs, on the air supply and exhaust blowers 12 and 13, operation control by which an air flow rate for the blower that is to have the differentiated air flow rate reflects the set air flow differential, as compared to the air flow rate for the reference blower. In other words, the operation control unit 193 obtains, for the reference blower, the air flow rate corresponding to the indoor air's carbon dioxide level detected by the carbon dioxide sensor 17 from the air flow rate setting information and performs the control that causes the reference blower to operate at the obtained air flow rate. Furthermore, the operation control unit 193 computes, for the blower that is to have the differentiated air flow rate, the air flow rate on the basis of the air flow rate for the reference blower and the air flow differential obtained from the air flow differentiation setting and performs the control that causes the blower that is to have the differentiated air flow rate to operate at the computed air flow rate.

Using the external device, such as the remote 18, the user or the like is enabled to make settings of choice, that is to say, to set a pair of specified air flow rates at an air volume point of choice and the blower that is to have the differentiated air flow rate. An air flow differential in this case is a difference between the specified air flow rate for the air supply blower 12 and the specified air flow rate for the exhaust blower 13 at the air volume point of choice. As described above, the air flow differential at the air volume point of choice may be set instead of the pair of specified air flow rates, and the reference blower may be set instead of the blower that is to have the differentiated air flow rate. The air volume point refers to the air volume that the user or the like wants to set among air volumes that can be achieved by operating the air supply blower 12 and the exhaust blower 13.

In one example, setting "specified supply air flow rate S1>specified exhaust air flow rate E1" keeps the interior of the room 51 to be ventilated at a positive pressure, enabling ventilation while restraining entry of air from other rooms. Setting "specified supply air flow rate S1<specified exhaust air flow rate E1" in another example keeps the interior of the target room 51 at a negative pressure, enabling ventilation while restraining air leakage from the room being ventilated to other rooms.

Here the air flow differential D is an air flow rate differential that is the specified supply air flow rate S1 minus the specified exhaust air flow rate E1, as defined by Formula (1) below. In one example, the air flow differential is set for an air volume notch that indicates an air volume closest to a target air volume point of choice by the user or the like among the 16-level air volume notches of the example air flow rate setting information illustrated in FIG. 5. When an air volume point of choice does not match any of the air volumes in the air flow rate setting information, the air flow differential is set for an air volume notch within a one-level difference from the air volume point of choice. Air flow differential D=Specified supply air flow rate S1-Specified exhaust air flow rate E1

A description is provided here of the automatic air volume control mode in the presence of a pair of specified air flow rates of choice or an air flow differential of choice by the user or the like. The air flow differentiation setting made here through the remote 18 includes the pair of specified air flow rates and the blower that is to have the differentiated air flow rate. Upon receiving the air flow differentiation setting from the remote 18, the operation control unit 193 computes the air flow differential D from the pair of specified air flow rates, using Formula (1). Furthermore, the operation control unit 193 stores the pair of specified air flow rates, the air flow differential, and the blower that is to have the differentiated air flow rate. The operation control unit 193 performs operation control based on the air flow rate setting information on the reference blower, which is the blower different from the blower that is to have the differentiated air flow rate. Furthermore, the operation control unit 193 computes, for the blower that is to have the differentiated air flow rate, an air flow rate by use of the air flow rate for the reference blower and the air flow differential and performs operation control on the blower that is to have the differentiated air flow rate to achieve the computed air flow rate. The carbon dioxide concentration varies during ventilation operation. Even after the carbon dioxide concentration changes, control that is based on the carbon dioxide concentration-based air flow rate obtained from the air flow rate setting information is similarly performed on the reference blower, and an air flow rate for the blower that is to have the differentiated air flow rate is computed similarly by use of the air flow rate for the reference blower and the air flow differential. In other words, even when the carbon dioxide concentration changes to another stage in the air flow rate setting information, the ventilation apparatus 1 is continuously operated, with the air flow differential maintained.

When the blower that is to have the differentiated air flow rate is the exhaust blower 13, the reference blower is the air supply blower 12. The operation control unit 193 obtains, for the air supply blower 12, the supply air flow rate corresponding to the carbon dioxide concentration from the air flow rate setting information and controls the air supply blower 12 at the obtained supply air flow rate. Furthermore, the operation control unit 193 computes the exhaust air flow rate EA for the exhaust blower 13, using the carbon dioxide concentration-based supply air flow rate SA preset for the air supply blower 12 in the air flow rate setting information and the air flow differential D. In this case, the exhaust air flow rate EA is computed, using Formula (2) below. The operation control unit 193 then controls the exhaust blower 13 at the computed exhaust air flow rate EA. Exhaust air flow rate EA=Supply air flow rate SA-Air flow differential D

When the blower that is to have the differentiated air flow rate is the air supply blower 12, the reference blower is the exhaust blower 13. The operation control unit 193 obtains, for the exhaust blower 13, the exhaust air flow rate corresponding to the carbon dioxide concentration from the air flow rate setting information and controls the exhaust blower 13 at the obtained exhaust air flow rate. Furthermore, the operation control unit 193 computes the supply air flow rate SA for the air supply blower 12, using the carbon dioxide concentration-based exhaust air flow rate EA preset for the exhaust blower 13 in the air flow rate setting information and the air flow differential D. In this case, the supply air flow rate SA is computed, using Formula (3) below. The operation control unit 193 then controls the air supply blower 12 at the computed supply air flow rate SA. Supply air flow rate SA=Exhaust air flow rate EA+Air flow differential D

FIG. 7 is a diagram illustrating an example of a relationship among the supply air flow rate, the exhaust air flow rate, the air flow rate difference, and the carbon dioxide concentration. This figure illustrates the relationship between the carbon dioxide concentration of the indoor air and the respective air flow rates for the blowers in actual operation. A unit of the air flow rate for each of the blowers in actual operation is m³/h, corresponding to a supply air volume per hour. For the air flow rate difference "SA-EA", "100" is entered as the difference between the supply air flow rate SA and the exhaust air flow rate EA. The air flow rate difference "SA-EA" matches the air flow differential.

When the supply air flow rate SA is taken as reference in FIG. 7, a numerical value of the supply air flow rate SA for each of the air volume notches is a preset value in the air flow rate setting information. A value of the exhaust air flow rate EA for each air volume notch is computed by the operation control unit 193, using Formula (2). For example, at air volume notch "16", the supply air flow rate SA in FIG. 7, which is "500", is the prestored value in the air flow rate setting information, and the operation control unit 193 controls the air supply blower 12 so that the supply air flow rate SA becomes "500". Furthermore, the operation control unit 193 computes, according to Formula (2), the exhaust air flow rate EA, which is "400", using the supply air flow rate SA of "500" for the air supply blower 12 as the reference and the air flow differential of "100". The operation control unit 193 then controls the exhaust blower 13 to achieve the computed exhaust air flow rate EA of "400".

When the exhaust air flow rate EA is taken as reference in FIG. 7, a numerical value of the exhaust air flow rate EA for each air volume notch is a preset value in the air flow rate setting information. A value of the supply air flow rate SA for each air volume notch is computed by the operation control unit 193, using Formula (3). For example, at air volume notch "16", the exhaust air flow rate EA in FIG. 7, which is "400", is the prestored value in the air flow rate setting information, and the operation control unit 193 controls the exhaust blower 13 so that the exhaust air flow rate EA becomes "400". Furthermore, the operation control unit 193 computes, according to Formula (3), the supply air flow rate SA, which is "500", using the exhaust air flow rate EA of "400" for the exhaust blower 13 as the reference and the air flow differential of "100". The operation control unit 193 then controls the air supply blower 12 to achieve the computed supply air flow rate SA of "500".

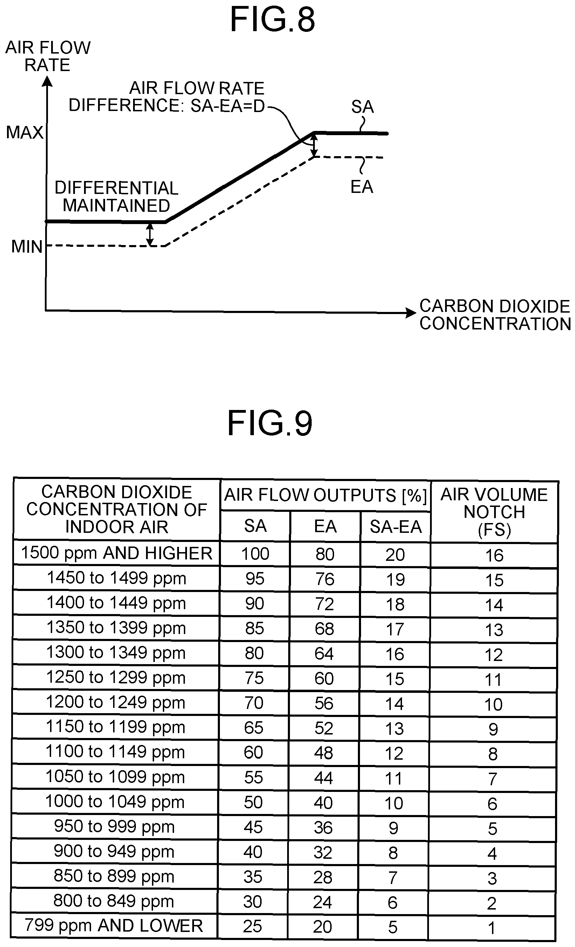

FIG. 8 is a diagram illustrating the example relationship among the supply air flow rate, the exhaust air flow rate, and the carbon dioxide concentration in the presence of the air flow differential. FIG. 8 illustrates FIG. 7 in graph form. An air flow rate curve for the air supply blower 12 is represented by SA, and an air flow rate curve for the exhaust blower 13 is represented by EA. As illustrated in FIG. 8, the supply air flow rate SA exceeds the exhaust air flow rate EA by the air flow differential D across an entire carbon dioxide concentration range. In other words, the air flow differential D is maintained across the entire carbon dioxide concentration range.

While the air flow differential D is defined by Formula (1) in the above example cases, the air flow differential D may be an air flow rate differential that is the specified exhaust air flow rate E1 minus the specified supply air flow rate S1, as defined by Formula (4) below. Air flow differential D=Specified exhaust air flow rate E1-Specified supply air flow rate S1

When the blower that is to have the differentiated air flow rate is the exhaust blower 13, the reference blower is the air supply blower 12. The operation control unit 193 obtains, for the air supply blower 12, the supply air flow rate corresponding to the carbon dioxide concentration from the air flow rate setting information and controls the air supply blower 12 at the obtained supply air flow rate. Furthermore, the operation control unit 193 computes the exhaust air flow rate EA for the exhaust blower 13, using the carbon dioxide concentration-based supply air flow rate SA preset for the air supply blower 12 in the air flow rate setting information and the air flow differential D. In this case, the exhaust air flow rate EA is computed, using Formula (5) below. The operation control unit 193 then controls the exhaust blower 13 at the computed exhaust air flow rate EA. Exhaust air flow rate EA=Supply air flow rate SA+Air flow differential D

When the blower that is to have the differentiated air flow rate is the air supply blower 12, the reference blower is the exhaust blower 13. The operation control unit 193 obtains, for the exhaust blower 13, the exhaust air flow rate corresponding to the carbon dioxide concentration from the air flow rate setting information and controls the exhaust blower 13 at the obtained exhaust air flow rate. Furthermore, the operation control unit 193 computes the supply air flow rate SA for the air supply blower 12, using the carbon dioxide concentration-based exhaust air flow rate EA preset for the exhaust blower 13 in the air flow rate setting information and the air flow differential D. In this case, the supply air flow rate SA is computed, using Formula (6) below. The operation control unit 193 then controls the air supply blower 12 at the computed supply air flow rate SA. Supply air flow rate SA = Exhaust air flow rate EA-Air flow differential D

In the above-described examples, the air flow rate for the blower that is to have the differentiated air flow rate is the difference between the air flow rate for the reference blower and the air flow differential or the sum of the air flow rate for the reference blower and the air flow differential. However, the air flow rate for the blower that is to have the differentiated air flow rate can be varied by choice. When the reference blower is the air supply blower 12, with the air flow differential being defined by Formula (1), the air supply blower 12 is controlled at the carbon dioxide concentration-based supply air flow rate preset in the air flow rate setting information. In the meantime, the exhaust blower 13, which is the blower that is to have the differentiated air flow rate, may be controlled at an air flow rate computed using Formula (7) below, where α is a constant. Exhaust air flow rate EA=Supply air flow rate SA-Air flow differential D×α×Supply air flow rate SA

When α is positive in Formula (7), the difference between the supply air flow rate and the exhaust air flow rate increases as the supply air flow rate increases and decreases as the supply air flow rate decreases.

FIG. 9 is a diagram illustrating an example of the relationship among the supply air flow rate, the exhaust air flow rate, the air flow rate difference, and the carbon dioxide concentration. This figure illustrates the relationship between the carbon dioxide concentration of the indoor air and the respective air flow outputs for the blowers. For FIG. 9, the reference blower is assumed to be the air supply blower 12. In the illustrated example, with the air flow differential D set at "20" and with α set at "0.01", the exhaust air flow rate EA is computed.

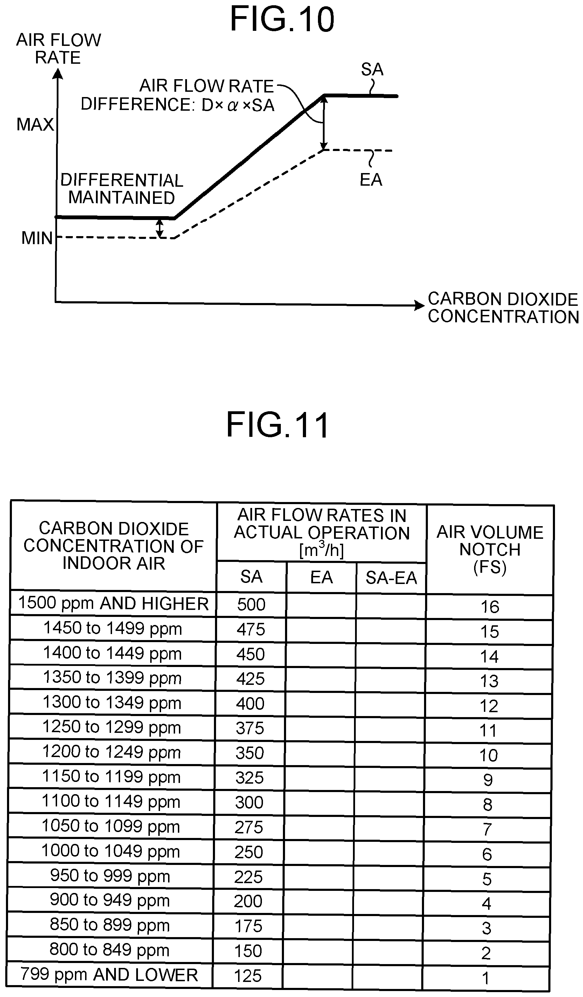

FIG. 10 is a diagram illustrating the example relationship among the supply air flow rate, the exhaust air flow rate, and the carbon dioxide concentration in the presence of the air flow differential. FIG. 10 illustrates FIG. 9 in graph form. In this drawing, a horizontal axis represents the carbon dioxide concentration, and a vertical axis represents the air flow rates for the blowers. An air flow rate curve for the air supply blower 12 is represented by SA, and an air flow rate curve for the exhaust blower 13 is represented by EA. As illustrated in FIGS. 9 and 10, as the supply air flow rate SA increases with the increasing carbon dioxide concentration, the air flow rate difference between the supply air flow rate SA and the exhaust air flow rate EA increases.

When the reference blower is the exhaust blower 13, the exhaust blower 13 is controlled at the carbon dioxide concentration-based exhaust air flow rate preset in the air flow rate setting information. In the meantime, the air supply blower 12, which is the blower that is to have the differentiated air flow rate, may be controlled at an air flow rate computed using Formula (8) below. Supply air flow rate SA=Exhaust air flow rate EA+Air flow differential D×α×Exhaust air flow rate EA

Even when the air flow differential is defined by Formula (4), the air flow rate for the blower that is to have the differentiated air flow rate can be computed with a similar approach.

As described above, the operation control unit 193 controls the reference blower, which is either the air supply blower 12 or the exhaust blower 13, at the reference air flow rate, which is the air flow rate preset in the air flow rate setting information, and controls the blower that is to have the differentiated air flow rate, which is different from the reference blower, at the air flow rate computed by use of the reference air flow rate for the reference blower and the air flow differential. The reference blower and the blower that is to have the differentiated air flow rate are usually set by the user or the like in the air flow differentiation setting. However, when not set by the user or the like, the reference blower and the blower that is to have the differentiated air flow rate may be predetermined blowers.

In the air flow differentiation setting, the user or the like may set the specified supply air flow rate S1 and the specified exhaust air flow rate E1, or the air flow differential at any of the 16-level air volume notches in the air flow rate setting information. Usually, the air flow differential between a maximum specified supply air flow rate and a maximum specified exhaust air flow rate is set at one of the 16-level air volume notches. This means that the operation control unit 193 applies the air flow differential set at the chosen one of the 16-level air volume notches to the other levels as well in the control.

There may also be a case where the user or the like sets air flow differentials at some of the 16-level air volume notches in the air flow rate setting information. In that case, each air volume notch where the air flow differential is set is designated as the set notch, and the operation control unit 193 uses the air flow differential from the closest set notch for control at an air volume notch where the carbon dioxide concentration of the indoor air belongs.

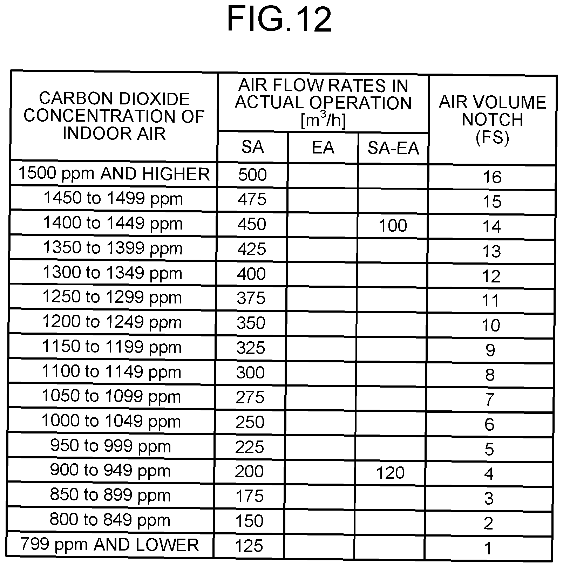

FIGS. 11 to 13 are diagrams illustrating an example of the air flow rate setting information. In the example given here, the supply air flow rate is taken as reference. Therefore, values are not input for the exhaust air flow rate EA and the air flow rate difference SA-EA in FIG. 11. For FIGS. 11 to 13, values for the air flow rate difference SA-EA are to indicate the air flow differentials D. The air flow differentiation setting is made by the user or the like through the remote 18. In this case, the air flow differentials are set at air volume notch 4 and air volume notch 13, resulting in FIG. 12. In other words, the air flow differential of "100" is entered for the air flow rate difference SA-EA at air volume notch 4 as the set notch, and the air flow differential of "120" is entered for the air flow rate difference SA-EA at air volume notch 13 as the set notch.

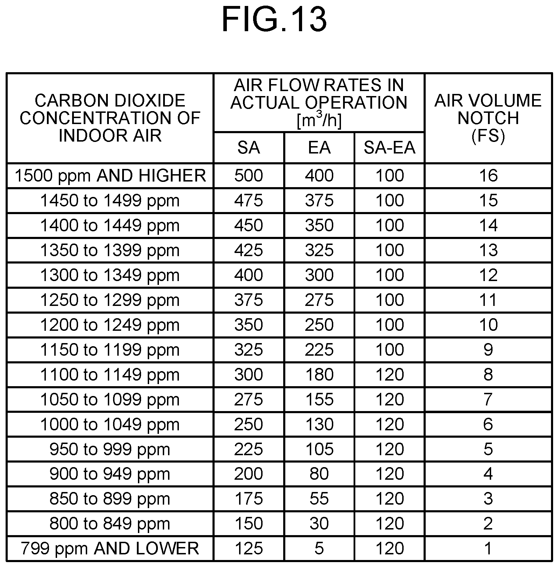

As described above, the operation control unit 193 uses the air flow differential from the closest set notch for control at an air volume notch where the carbon dioxide concentration of the indoor air belongs. As illustrated in FIG. 13, for air volume notches 1 to 8 closest to air volume notch 4, which is the set notch, the air flow differential of "100" set at air volume notch 4 is used. For air volume notches 9 to 16 closest to air volume notch 13, which is the set notch, the air flow differential of "120" set at air volume notch 13 is used. When the two set notches differ equally from an air volume notch corresponding to the carbon dioxide concentration of the indoor air, either of the two set notches may be used.

In all the controls described so far, priority is given to the air flow rate differentiation when air flow rates for the blowers are determined. In other words, as illustrated in FIGS. 7, 9, and 13, the air flow rate difference is established between the supply air flow rate and the exhaust air flow rate at any carbon dioxide concentration. Such a mode that differentiates the air flow rates at any carbon dioxide concentration is referred to as the air flow differentiation preference mode.

Ensuring energy saving is also possible by decrementing the air flow rate to the lower limit, taking precedence over the air flow differentiation of the supply air flow rate and the exhaust air flow rate. Such a mode that cancels the air flow rate difference between the supply and exhaust air flow rates and decrements the air flow rate to the lower limit is referred to as the air flow rate reduction preference mode.

In the air flow rate reduction preference mode being set, decrementing the air flow rate takes precedence over maintaining the air flow rate difference when the blower with the lower air flow rate, which is either the air supply blower 12 or the exhaust blower 13, reaches the lower-limit air flow rate. Therefore, the operation control unit 193 decreases the air flow rate difference in order to decrement the air flow rate until the air flow rates for the air supply blower 12 and the exhaust blower 13 settle at the lower limits. In other words, when either the air supply blower 12 or the exhaust blower 13 reaches the lower-limit air flow rate, the operation control unit 193 performs control that causes the air flow rate for the other blower to reach the lower limit without maintaining the air flow differential.

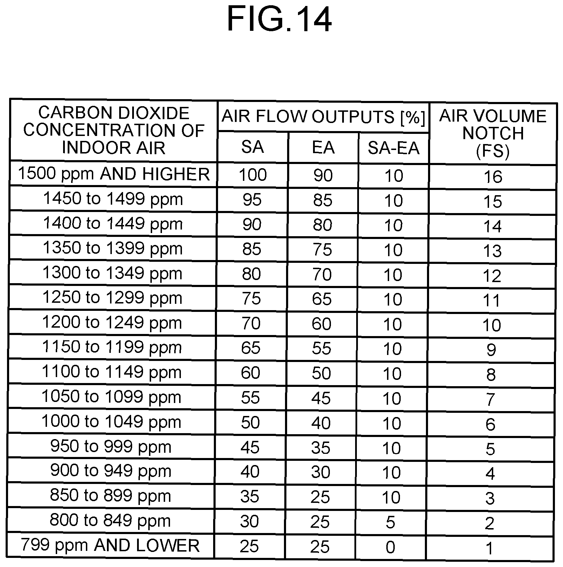

FIG. 14 is a diagram illustrating example supply and exhaust air flow rate setting and example air flow rate differences in the air flow rate reduction preference mode. In this case, the exhaust air flow rate EA is taken as reference and is a value specified in air flow rate setting information. In addition, the exhaust air flow rate EA is set to be lower than the supply air flow rate SA. In FIG. 14, the supply air flow rate SA is computed by use of the exhaust air flow rate EA and the air flow differential D until the exhaust air flow rate EA reaches the lower limit of 25%.

As illustrated in this figure, both the exhaust air flow rate EA and the supply air flow rate SA decrease from a carbon dioxide concentration of at least 1500 ppm. When the carbon dioxide concentration is between 850 ppm and 899 ppm inclusive, the exhaust air flow rate EA reaches the lower limit of 25%. Upon detecting that the carbon dioxide concentration has become 849 ppm or lower, with the exhaust air flow rate reaching the lower limit, the operation control unit 193 decrements the supply air flow rate SA without maintaining the air flow differential D. Here the supply air flow rate SA is set at 30%, with the air flow rate difference SA-EA being "5". When the carbon dioxide concentration decreases further and becomes 799 ppm or lower, the supply air flow rate is set at the lower limit of 25%, with the air flow rate difference SA-EA being "0". This enables the air flow rate for the air supply blower 12 to also become the lowest value.

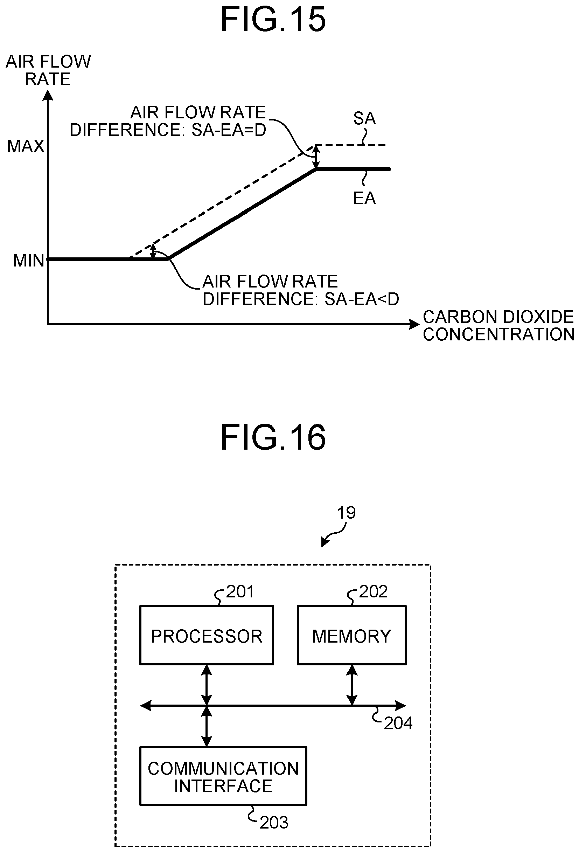

FIG. 15 is a diagram illustrating an example relationship among the supply air flow rate, the exhaust air flow rate, and the carbon dioxide concentration in the air flow rate reduction preference mode. FIG. 15 illustrates the air flow rate setting information of FIG. 14 in graph form. In this drawing, a horizontal axis represents the carbon dioxide concentration, and a vertical axis represents the air flow rates for the blowers. An air flow rate curve for the air supply blower 12 is represented by SA, and an air flow rate curve for the exhaust blower 13 is represented by EA. In FIG. 15 as well, after the exhaust air flow rate EA reaches the lower limit, the air flow rate difference SA-EA between the supply air flow rate SA and the exhaust air flow rate EA is illustrated to become smaller than the air flow differential D, causing the supply air flow rate SA to reach the lower limit.

The air flow differentiation preference mode and the air flow rate reduction preference mode can be set through the remote 18 in the air flow differentiation setting. In other words, a choice can be made between the air flow differentiation preference mode and the air flow rate reduction preference mode in the air flow differentiation setting being made for the automatic air volume control mode. In case such setting is not made, there may be a provision that either the air flow differentiation preference mode or the air flow rate reduction preference mode is applied.

FIG. 16 is a block diagram exemplifying a hardware configuration of the control unit provided for the ventilation apparatus according to the first embodiment. The control unit 19 includes a processor 201, a memory 202, and a communication interface 203. The processor 201, the memory 202, and the communication interface 203 are connected via a bus 204.

The processor 201 is a CPU. The processor 201 may be a processing unit, an arithmetic unit, a microprocessor, a microcomputer, or a DSP. The functions of the control unit 19 are implemented with the processor 201 and software, firmware, or a combination of software and firmware. The software or the firmware is described as programs and is stored in the memory 202, which is a built-in memory.

The memory 202 is a nonvolatile or volatile semiconductor memory, such as a RAM, a ROM, a flash memory, an EPROM, or an EEPROM (registered trademark). The memory 202 stores the programs intended for the operation of the ventilation apparatus 1 and the air flow rate setting information, among others. The memory 202 to be used is preferably a nonvolatile memory that prevents stored information from being erased even when the power to the ventilation apparatus 1 is cut off.

The communication interface 203 communicates with the remote 18 or an external device (not illustrated) to transmit and receive information.

The processor 201 takes charge of processing and control of the entire ventilation apparatus 1 by reading via the bus 204 and executing the programs stored in the memory 202. The processor 201 is used to implement the functions of the control unit 19 illustrated in FIG. 4.

The memory 202 is used as a work area for the processor 201. The memory 202 also stores programs, such as a boot program, a communications program, and air flow rate control programs that are used for implementation of an air flow rate control method to be described later. When implementing the above-mentioned air flow rate control method, the processor 201 loads the air flow rate control programs into the memory 202 and performs various operations.

Next, the air flow rate control method for the ventilation apparatus 1 that are carried out by the control unit 19 are described, being divided between a case where the air flow rate reduction preference mode is selected and a case where the air flow differentiation preference mode is selected.

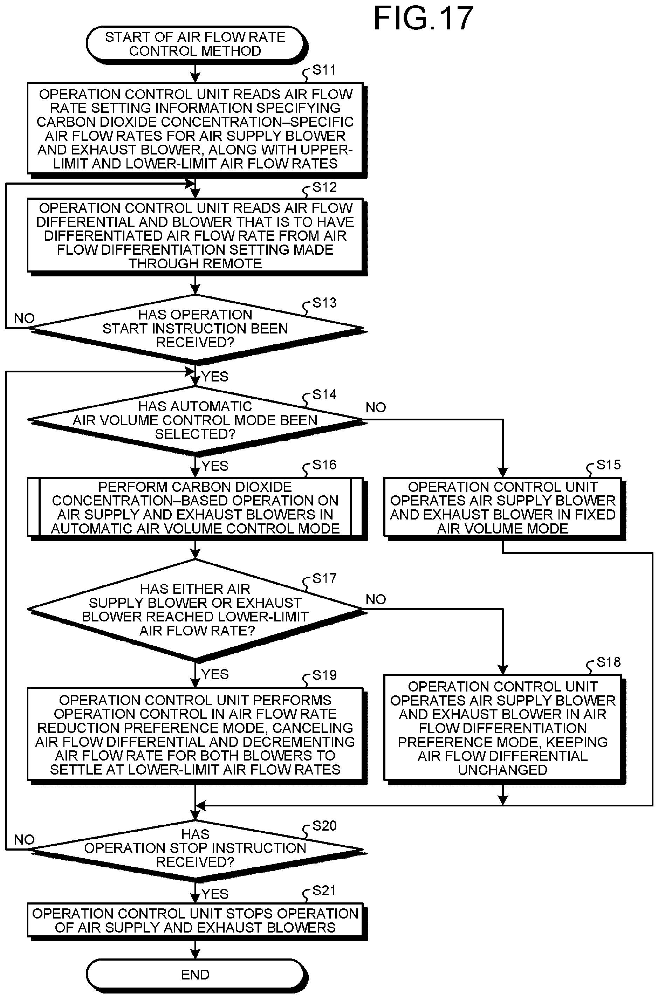

FIG. 17 is a flowchart exemplifying a procedure of the air flow rate control method for the ventilation apparatus in the case where the air flow rate reduction preference mode is selected. First, the operation control unit 193 reads the air flow rate setting information specifying the carbon dioxide concentration-specific air flow rates for the air supply blower 12 and the exhaust blower 13, along with the upper-limit and lower-limit air flow rates (step S11).

Next, the operation control unit 193 reads the air flow differential and the blower that is to have the differentiated air flow rate from the air flow differentiation setting made through the remote 18 (step S12). If the air flow differentiation setting includes the pair of specified air flow rates, the operation control unit 193 computes the air flow differential from the pair of specified air flow rates. If the reference blower is set instead of the blower that is to have the differentiated air flow rate in the air flow differentiation setting, the operation control unit 193 reads the reference blower. The operation control unit 193 may store the air flow differentiation setting in the air flow rate setting information storage unit 192.

Subsequently, the operation control unit 193 determines whether or not an operation start instruction has been received in the operation setting (step S13). If the operation start instruction has not been received (No at step S13), a return is made to the operation at step S12. If the operation start instruction has been received (Yes at step S13), the operation control unit 193 determines whether or not the automatic air volume control mode has been selected in the operation setting (step S14). If the automatic air volume control mode has not been selected (No at step S14), the operation control unit 193 operates the air supply blower 12 and the exhaust blower 13 in the fixed air volume mode (step S15). In other words, the operation control unit 193 operates the air supply blower 12 and the exhaust blower 13 fixedly at the air volume notch selected in the operation setting. In this case, the operation control unit 193 obtains, from the air flow rate setting information, the air flow rates for the air supply and exhaust blowers 12 and 13 that correspond to the selected air volume notch and controls the air supply blower 12 and the exhaust blower 13 at the obtained air flow rates.

If the automatic air volume control mode has been selected at step S14 (Yes at step S14), the operation control unit 193 performs carbon dioxide concentration-based operation on the air supply and exhaust blowers 12 and 13 in the automatic air volume control mode (step S16). In other words, the operation control unit 193 varies the air flow rates for the air supply and exhaust blowers 12 and 13 in accordance with the carbon dioxide concentration. Here the operation control unit 193 performs air flow differentiation-based operation on the air supply and exhaust blowers 12 and 13 by use of the air flow differential for the air flow differentiation preference mode and cancels the air flow differential in operating the air supply and exhaust blowers 12 and 13 for the air flow rate reduction preference mode.

Subsequently, the operation control unit 193 determines whether or not either the air supply blower 12 or the exhaust blower 13 has reached the lower-limit air flow rate (step S17). If the one of the air supply and exhaust blowers 12 and 13 has not reached the lower-limit air flow rate (No at step S17), the operation control unit 193 operates the air supply blower 12 and the exhaust blower 13 in the air flow differentiation preference mode, keeping the air flow differential unchanged (step S18).

If the one of the air supply and exhaust blowers 12 and 13 has reached the lower-limit air flow rate (Yes at step S17), the operation control unit 193 performs the operation control in the air flow rate reduction preference mode, canceling the air flow differential and decrementing the air flow rate for both the blowers to settle at the lower-limit air flow rates (step S19).

After step S15, S18, or S19, the operation control unit 193 determines whether or not an operation stop instruction has been received in the operation setting (step S20). If the operation stop instruction has not been received (No at step S20), a return is made to the operation at step S14. If the operation stop instruction has been received (Yes at step S20), the operation control unit 193 stops the operation of the air supply and exhaust blowers 12 and 13 (step S21), and the process ends.

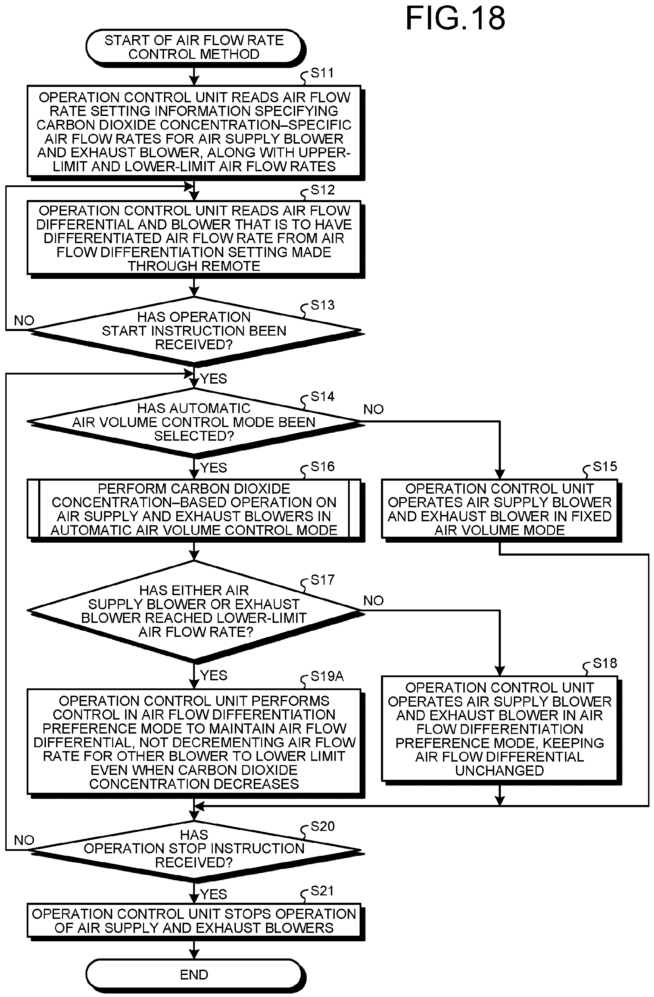

FIG. 18 is a flowchart exemplifying a procedure of the air flow rate control method for the ventilation apparatus in the case where the air flow differentiation preference mode is selected. Steps S11 to S18 are the same operations as in FIG. 17 and thus are not described.

If the one of the air supply and exhaust blowers 12 and 13 has reached the lower-limit air flow rate at step S17 (Yes at step S17), the operation control unit 193 performs the control in the air flow differentiation preference mode to maintain the air flow differential, not decrementing the air flow rate for the other blower to the lower limit even when the carbon dioxide concentration decreases (step S19A). The operations from step S20 onward in FIG. 17 are performed afterward.

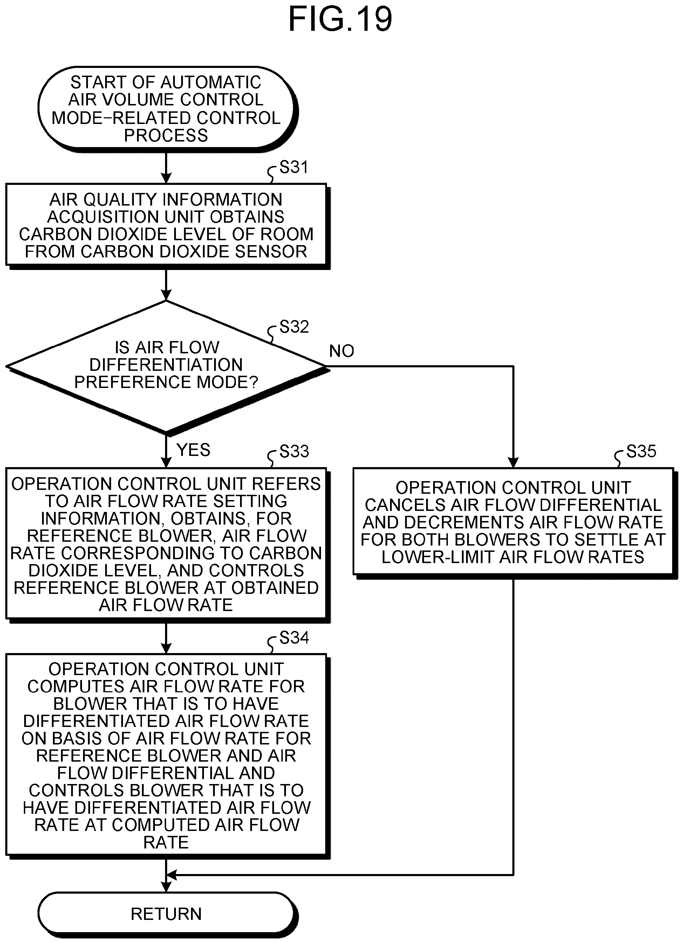

A description is provided here of an automatic air volume control mode-related control process at step S16 of the air flow rate control method illustrated in FIGS. 17 and 18 for the ventilation apparatus 1. FIG. 19 is a flowchart exemplifying a procedure of the automatic air volume control mode-related control process. First, the air quality information acquisition unit 191 obtains the carbon dioxide level, which is the air quality level of the room 51, from the carbon dioxide sensor 17, which is the air quality sensor (step S31). Next, the operation control unit 193 determines whether the air flow differentiation preference mode is the case or not (step S32).

If the air flow differentiation preference mode is the case (Yes at step S32), the operation control unit 193 refers to the air flow rate setting information, obtains, for the reference blower, the air flow rate that corresponds to the carbon dioxide level, and controls the reference blower at the obtained air flow rate (step S33). The operation control unit 193 computes the air flow rate for the blower that is to have the differentiated air flow rate on the basis of the air flow rate for the reference blower and the air flow differential and controls the blower that is to have the differentiated air flow rate at the computed air flow rate (step S34). A return is made to the operation of step S17 in FIGS. 17 and 18 afterward.

If the air flow differentiation preference mode is not the case at step S32 (No at step S32), that is to say, if the air flow rate reduction preference mode is the case, the operation control unit 193 is to cancel the air flow differential and decrement the air flow rate for both the blowers to settle at the lower-limit air flow rates (step S35). In other words, the operation control unit 193 is to perform the operation control that cancels the air flow differential and decrements the air flow rate for the other blower, which is different from the blower that has reached the lower-limit air flow rate, to the lower limit. A return is made to the operation of step S17 in FIGS. 17 and 18 afterward.

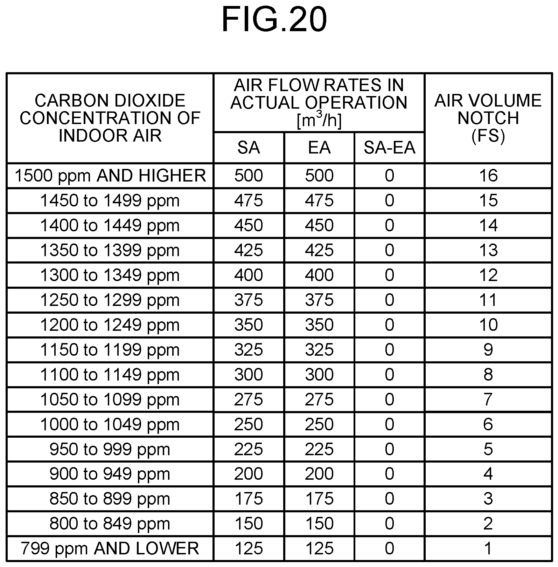

A description is provided next of an example of controlling the ventilation air volume of the ventilation apparatus 1 in the automatic air volume control mode. FIG. 20 is a diagram illustrating an example of the air flow rate setting information before the automatic air volume control mode is implemented. In one example, this air flow rate setting information is used in the fixed air volume mode. The air flow rate setting information includes plural divided stages between the upper-limit switching threshold and the lower-limit switching threshold, with the supply air flow rate and the exhaust air flow rate set for each of the stages. For example, the range between the upper-limit and lower-limit switching thresholds stored in the air flow rate setting information storage unit 192 is divided into, as described above, the 15 equal parts, classifying carbon dioxide concentrations into 16 stages. In this example, the upper-limit switching threshold is set at 1500 ppm, and the lower-limit switching threshold is set at 750 ppm. For each stage, the supply air flow rate and the exhaust air flow rate are set. Carbon dioxide concentrations of the indoor air are labelled "799 ppm and lower" at air volume notch "1" in FIG. 20 but should be labelled "750 ppm to 799 ppm inclusive" if the range between the upper-limit and lower-limit switching thresholds is divided into the 15 equal parts as described above. However, since the control applies even to cases where the carbon dioxide level is 750 ppm or lower, the figure says, "799 ppm and lower".

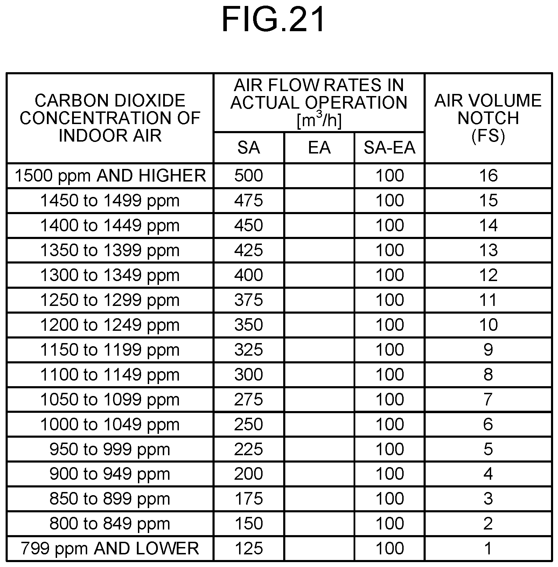

The air flow differentiation setting is assumed to have been made through the remote 18, setting the exhaust blower 13 as the blower that is to have the differentiated air flow rate and setting the air flow differential at 100 [m³/h]. FIG. 21 is a diagram illustrating the example air flow rate setting information when the automatic air volume control mode is implemented. As illustrated in this figure, since the reference blower is the air supply blower 12, the air flow rates from FIG. 20 are set for the supply air flow rate SA. The air flow differential of "100" is set for the air flow rate difference SA-EA across the entire carbon dioxide concentration range. The exhaust air flow rate EA for the exhaust blower 13, which is the blower that is to have the differentiated air flow rate, is obtained by computation and is, therefore, not illustrated here.

In the automatic air volume control mode, the carbon dioxide sensor 17 starts sensing operation for detecting the carbon dioxide concentration of the indoor air under control of the air quality information acquisition unit 191. At this time, the ventilation apparatus 1 preferably performs the ventilation operation at the highest air volume, which is the maximum air flow rate, to ensure that the carbon dioxide sensor 17 stably detects the carbon dioxide concentration of the indoor air in a short period of time. It is to be noted that as long as the carbon dioxide sensor 17 can detect the carbon dioxide concentration of the indoor air, the ventilation air volume of the ventilation apparatus 1 is not limited to the highest air volume. Subsequently, the air quality information acquisition unit 191 obtains the carbon dioxide level of the indoor air from the carbon dioxide sensor 17.

As illustrated in FIG. 1, the ventilation apparatus 1 is installed in the ceiling space 52, hidden from the room 51. Therefore, stopping the operation of the ventilation apparatus 1 results in no flow of air inside the ventilation apparatus 1. Consequently, accurate detection of the indoor air's carbon dioxide level is not possible with the carbon dioxide sensor 17 installed in the pre-heat exchange indoor-air passage 116a. Therefore, while the automatic air volume control mode is set as a mode of operation for the ventilation apparatus 1, continuous operation of the ventilation apparatus 1, particularly the exhaust blower 13, at the lowest air volume enables a constant flow of air in the pre-heat exchange indoor-air passage 116a. In this way, the carbon dioxide sensor 17 is constantly enabled to accurately detect the carbon dioxide concentration of the indoor air.

When the automatic air volume control mode is selected as the mode of operation, the ventilation apparatus 1 is continuously operated at the lowest air volume as described above, thus allowing for the constant and accurate detection of the indoor air's carbon dioxide concentration with the carbon dioxide sensor 17.

FIG. 7 is a result of entering computed results for the exhaust air flow rate EA in FIG. 21. As described above, the exhaust air flow rate EA is computed on the basis of the supply air flow rate SA for the air supply blower 12, which is the reference blower, and the air flow differential. In this example, the exhaust air flow rate EA is computed according to Formula (2), resulting in a value "100" lower than the value of the supply air flow rate SA.

When the automatic air volume control mode is the case, the continuous operation of the ventilation apparatus 1 at the lowest air volume is exemplified above; however, the ventilation apparatus 1 may be operated on a different condition. For example, if the indoor air's carbon dioxide level detected by the carbon dioxide sensor 17 is as low as less than 700 ppm, the ventilation apparatus 1 may be operated intermittently or periodically instead of continuously, allowing the carbon dioxide sensor 17 to intermittently detect the carbon dioxide level of the room 51. In that case as well, the air flows through the pre-heat exchange indoor-air passage 116a in the intermittent manner, thus allowing for the accurate detection of the intermittent carbon dioxide levels of the indoor air with the carbon dioxide sensor 17.

The ventilation air volume has been described as being changed in stages on the basis of the indoor air's carbon dioxide concentration; however, this mode of changing the ventilation air volume is not limiting. Stepless changing of the ventilation air volume in response to the indoor air's carbon dioxide concentration may be a mode of changing the ventilation air volume of the ventilation apparatus 1.

In that case, the indoor air's carbon dioxide level detected by the carbon dioxide sensor 17 corresponds by itself to a threshold of the indoor air's carbon dioxide concentration. On the basis of a correlation between the indoor air's carbon dioxide concentration and the ventilation air volume, the ventilation apparatus 1 may undergo control that steplessly changes the ventilation air volume in response to the carbon dioxide concentration of the indoor air.

The ventilation apparatus 1 according to the first embodiment includes the air supply blower 12 installed in the supply air passage 115; the exhaust blower 13 installed in the exhaust air passage 116; the carbon dioxide sensor 17 that detects an air quality level of the room 51; the external device to be used for setting the blower that is to have the differentiated air flow rate and a pair of specified air flow rates; and the control unit 19 that performs, on the air supply blower 12 and the exhaust blower 13, the air flow rate control based on the air quality level of the carbon dioxide sensor 17. The control unit 19 controls the reference blower, which is either the air supply blower 12 or the exhaust blower 13, at the reference air flow rate, which is the air flow rate preset in the air flow rate setting information. The control unit 19 controls the other blower at an air flow rate computed by use of the reference air flow rate and an air flow differential computed from the pair of specified air flow rates. This produces effects of enabling the user or the like to independently set a supply air flow rate of choice and an exhaust air flow rate of choice and allowing for the supply and exhaust air flow rate control based on the air quality, with a relationship between the set supply air flow rate of choice and the set exhaust air flow rate of choice maintained.

### Second Embodiment.

In the first embodiment, the examples where the air flow differential is defined by Formula (1) or Formula (4) have been given. In other words, the air flow differential has been either the difference value that is the specified supply air flow rate S1 minus the specified exhaust air flow rate E1 or the difference value that is the specified exhaust air flow rate E1 minus the specified supply air flow rate S1. In a second embodiment, examples where the difference value is not used as the air flow differential is given.

The ventilation apparatus 1 according to the second embodiment has the same configuration as described in the first embodiment, so its configuration is not described. A description is hereinafter provided of differences from the first embodiment.

In the second embodiment, the air flow differential D is a ratio of the specified supply air flow rate S1 to the specified exhaust air flow rate E1, as defined by Formula (9) below. Air flow differential D=Specified supply air flow rate S1/Specified exhaust air flow rate E1

When a blower that is to have a differentiated air flow rate is the exhaust blower 13, a reference blower is the air supply blower 12. The operation control unit 193 obtains, for the air supply blower 12, a supply air flow rate corresponding to concentration of carbon dioxide from air flow rate setting information and controls the air supply blower 12 at the obtained supply air flow rate. Furthermore, the operation control unit 193 computes the exhaust air flow rate EA for the exhaust blower 13, using the carbon dioxide concentration-based supply air flow rate SA preset for the air supply blower 12 in the air flow rate setting information and the air flow differential D. In this case, the exhaust air flow rate EA is computed, using Formula (10) below. Exhaust air flow rate EA=Supply air flow rate SA/Air flow differential D

When the blower that is to have the differentiated air flow rate is the air supply blower 12, the reference blower is the exhaust blower 13. The operation control unit 193 obtains, for the exhaust blower 13, an exhaust air flow rate corresponding to the carbon dioxide concentration from the air flow rate setting information and controls the exhaust blower 13 at the obtained exhaust air flow rate. Furthermore, the operation control unit 193 computes the supply air flow rate SA for the air supply blower 12, using the carbon dioxide concentration-based exhaust air flow rate EA preset for the exhaust blower 13 in the air flow rate setting information and the air flow differential D. In this case, the supply air flow rate SA is expressed by Formula (11) below. Supply air flow rate SA=Exhaust air flow rate EA×Air flow differential D

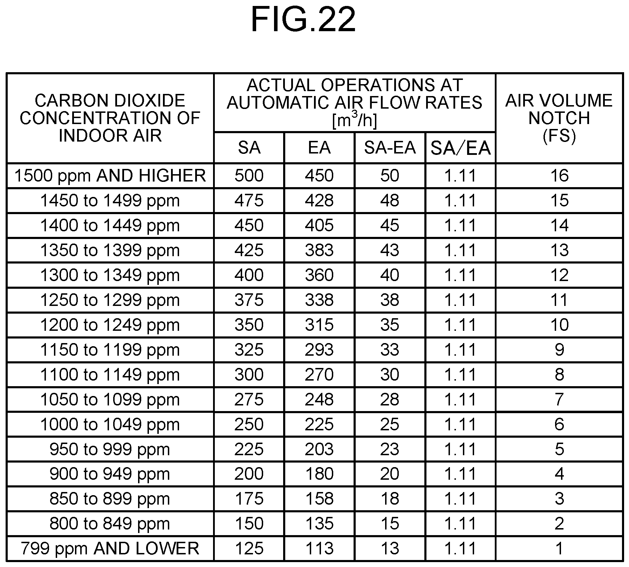

FIG. 22 is a diagram illustrating an example relationship among the carbon dioxide concentration, the supply air flow rate, and the exhaust air flow rate, with the air flow differential expressed as a ratio of the supply air flow rate to the exhaust air flow rate. FIG. 22 illustrates the relationship among the carbon dioxide concentration of indoor air, the supply air flow rate SA, and the exhaust air flow rate EA. The air flow rate difference SA-EA indicates a difference between the supply air flow rate SA and the exhaust air flow rate EA. An air flow ratio SA/EA indicates the ratio of the supply air flow rate to the exhaust air flow rate, corresponding to the air flow differential D. For FIG. 22, an instruction is assumed to have been given from the remote 18 for setting of the ratio of the supply air flow rate SA to the exhaust air flow rate EA at "1.11" as the air flow differential at a given notch.

When the supply air flow rate SA is taken as reference in FIG. 22, a numerical value of the supply air flow rate SA for each air volume notch is a preset value in the air flow rate setting information. A value of the exhaust air flow rate EA for each air volume notch is computed by the operation control unit 193, using Formula (10). For example, at air volume notch "16", the supply air flow rate SA in FIG. 22, which is "500", is the prestored value in the air flow rate setting information, and the operation control unit 193 controls the air supply blower 12 so that the supply air flow rate SA becomes "500". Furthermore, the operation control unit 193 computes, according to Formula (10), the exhaust air flow rate EA, which is "450", using the supply air flow rate SA of "500" for the air supply blower 12 as the reference and the air flow differential of "1.11". The operation control unit 193 then controls the exhaust blower 13 to achieve the computed exhaust air flow rate EA of "450".

The operation control unit 193 may compute, as the air flow differential D, the difference between the supply air flow rate SA and the exhaust air flow rate EA that achieves the supply air flow rate SA to exhaust air flow rate EA ratio of 1.11. In other words, the air flow rate difference that achieves 1.11 for the ratio of the supply air flow rate SA to the exhaust air flow rate EA may be the air flow differential D. In that case, the air flow rate difference SA-EA in FIG. 22 corresponds to the air flow differential D. For example, at air volume notch "16", the operation control unit 193 computes the exhaust air flow rate EA, which is "450", according to Formula (2), using the supply air flow rate SA of "500" for the air supply blower 12 as the reference and the air flow rate difference SA-EA of "50".

When the exhaust air flow rate EA is taken as reference in FIG. 22, a numerical value of the exhaust air flow rate EA for each air volume notch is a preset value in the air flow rate setting information. A value of the supply air flow rate SA for each air volume notch is computed by the operation control unit 193, using Formula (11). For example, at air volume notch "16", the exhaust air flow rate EA in FIG. 22, which is "450", is the prestored value in the air flow rate setting information, and the operation control unit 193 controls the exhaust blower 13 so that the exhaust air flow rate EA becomes "450". Furthermore, the operation control unit 193 computes, according to Formula (11), the supply air flow rate SA, which is "500", using the exhaust air flow rate EA of "450" for the exhaust blower 13 as the reference and the air flow differential of "1.11". The operation control unit 193 then controls the air supply blower 12 to achieve the computed supply air flow rate SA of "500".

The operation control unit 193 may compute, as the air flow differential D, the difference between the supply air flow rate SA and the exhaust air flow rate EA that achieves the supply air flow rate SA to exhaust air flow rate EA ratio of 1.11. In other words, the air flow rate difference that achieves 1.11 for the ratio of the supply air flow rate SA to the exhaust air flow rate EA may be the air flow differential D. In that case, the air flow rate difference SA-EA in FIG. 22 corresponds to the air flow differential D. For example, at air volume notch "16", the operation control unit 193 computes the supply air flow rate SA, which is "500", according to Formula (3), using the exhaust air flow rate EA of "450" for the exhaust blower 13 as the reference and the air flow rate difference SA-EA of "50".

While the air flow differential D is defined by Formula (9) in the above example cases, the air flow differential D may be a ratio of the specified exhaust air flow rate E1 to the specified supply air flow rate S1, as defined by Formula (12) below. Air flow differential D=Specified supply air flow rate S1/Specified exhaust air flow rate E1

When a blower that is to have a differentiated air flow rate is the exhaust blower 13, a reference blower is the air supply blower 12. The operation control unit 193 obtains, for the air supply blower 12, a supply air flow rate corresponding to concentration of carbon dioxide from air flow rate setting information and controls the air supply blower 12 at the obtained supply air flow rate. Furthermore, the operation control unit 193 computes the exhaust air flow rate EA for the exhaust blower 13, using the carbon dioxide concentration-based supply air flow rate SA preset for the air supply blower 12 in the air flow rate setting information and the air flow differential D. In this case, the exhaust air flow rate EA is computed, using Formula (13) below. The operation control unit 193 then controls the exhaust blower 13 at the computed exhaust air flow rate EA. Exhaust air flow rate EA=Supply air flow rate SA/Air flow differential D

When the blower that is to have the differentiated air flow rate is the air supply blower 12, the reference blower is the exhaust blower 13. The operation control unit 193 obtains, for the exhaust blower 13, an exhaust air flow rate corresponding to the carbon dioxide concentration from the air flow rate setting information and controls the exhaust blower 13 at the obtained exhaust air flow rate. Furthermore, the operation control unit 193 computes the supply air flow rate SA for the air supply blower 12, using the carbon dioxide concentration-based exhaust air flow rate EA preset for the exhaust blower 13 in the air flow rate setting information and the air flow differential D. In this case, the supply air flow rate SA is computed, using Formula (14) below. The operation control unit 193 then controls the air supply blower 12 at the computed supply air flow rate SA. Supply air flow rate SA=Exhaust air flow rate EA×Air flow differential D

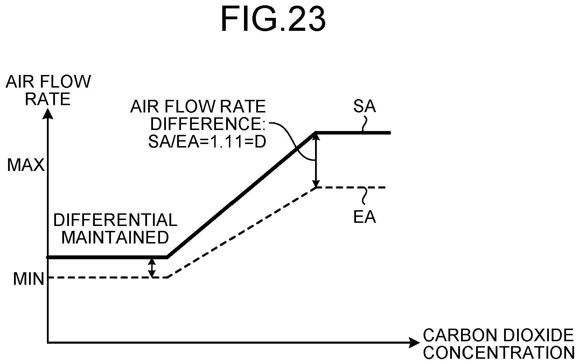

FIG. 23 is a diagram illustrating the example relationship among the supply air flow rate, the exhaust air flow rate, and the carbon dioxide concentration in the presence of the air flow differential. FIG. 23 illustrates FIG. 22 in graph form. In FIG. 23, a horizontal axis represents the carbon dioxide concentration, and a vertical axis represents the air flow rates for the blowers. This drawing illustrates that the difference between the supply air flow rate and the exhaust air flow rate increases as the carbon dioxide concentration increases, more specifically, as the air flow rate for the reference blower increases.

The second embodiment also allows for the same effects as the first embodiment.

### Third Embodiment.

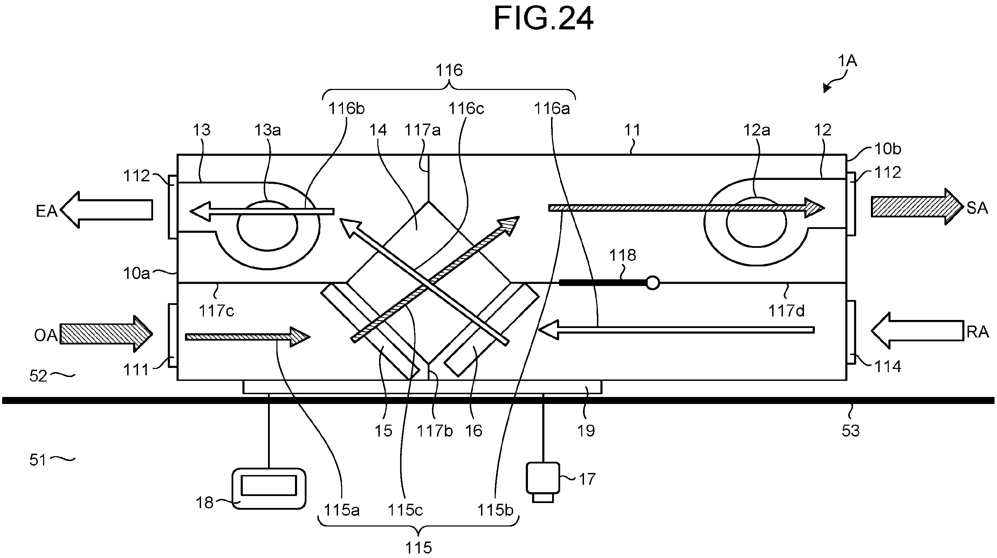

FIG. 24 is a sectional view schematically illustrating a configuration example of a ventilation apparatus according to a third embodiment. Constituent elements identical with those in FIG. 1 have the same reference characters below and are not described. The ventilation apparatus 1A according to the third embodiment differs from that of the first embodiment in that the carbon dioxide sensor 17 is installed in the room 51. By having such a configuration where the carbon dioxide sensor 17 is installed in the room 51, the ventilation apparatus 1A, unlike the ventilation apparatus 1 according to the first embodiment, can accurately detect indoor air's carbon dioxide concentration even when ventilation operation of the ventilation apparatus 1A is stopped.

While FIG. 24 illustrates the carbon dioxide sensor 17 installed in the room 51, the carbon dioxide concentration may be obtained from a device other than the ventilation apparatus 1A as long as the detection of the indoor air's carbon dioxide concentration is enabled. In other words, the carbon dioxide sensor 17 may be a carbon dioxide sensor installed in the device other than the ventilation apparatus 1A, and the control unit 19 of the ventilation apparatus 1A may obtain a carbon dioxide level detected by the carbon dioxide sensor 17 via communication from the device other than the ventilation apparatus 1A. An example of the device other than the ventilation apparatus 1A is an air conditioner with a carbon dioxide sensor, a fan heater with a carbon dioxide sensor, or the like, or can be a device of choice with a carbon dioxide sensor. In that case, however, the control unit 19 of the ventilation apparatus 1A includes a communication unit for obtaining the carbon dioxide concentration from the device other than the ventilation apparatus 1A. In that case as well, even when the ventilation operation of the ventilation apparatus 1A is stopped, the ventilation apparatus 1A is enabled to accurately detect the indoor air's carbon dioxide concentration, along with outdoor air's carbon dioxide concentration.

In the third embodiment, the carbon dioxide sensor 17 is disposed in the room 51. This produces an effect of enabling the accurate detection of the indoor air's carbon dioxide concentration even when the ventilation operation of the ventilation apparatus 1A is stopped.

The ventilation apparatus 1A is capable of accurately detecting the carbon dioxide concentration of the indoor air even when the ventilation operation of the ventilation apparatus 1A is stopped. Therefore, the continuous or intermittent ventilation operation as required of the ventilation apparatus 1 according to the first embodiment for the accurate detection of the indoor air's carbon dioxide concentration in the sensing operation is not required with the ventilation apparatus 1A according to the third embodiment. Consequently, the ventilation apparatus 1A allows for a shorter ventilation operation time and can have an enhanced energy-saving effect. In addition, the ventilation apparatus 1A reduces an outdoor air load, thus enhancing energy-saving effects of an air conditioner that air-conditions the room to be ventilated by the ventilation apparatus 1A and other air conditioners.

In the above-described embodiments, the ventilation apparatuses 1 and 1A have been described as the heat exchange ventilation apparatuses that each have the heat exchange element 14; however, each of the ventilation apparatuses 1 and 1A may be a ventilation apparatus without the heat exchange element 14. In other words, the ventilation apparatuses 1 and 1A are not limited to being the heat exchange ventilation apparatuses as long as the ventilation apparatuses 1 and 1A have ventilation functionality.

In the examples of the above-described embodiments, the carbon dioxide sensor 17 has been described as being the air quality sensor; however, the air quality sensor is not limited to the carbon dioxide sensor 17. The air quality sensor can include at least one sensor selected from the group consisting of the carbon dioxide sensor 17, a dust sensor that measures dust concentration, a volatile organic compound (VOC) gas sensor that detects VOC gases, an odor sensor that detects odorous substances, a carbon monoxide (CO) sensor that detects CO, and an occupancy sensor that detects how many people are in the room 51.

While the heat exchange ventilation apparatuses have been exemplified in the above-described embodiments, any ventilation apparatuses that perform class 1 ventilation where air supply and air discharge take place simultaneously are adequate. For example, the ventilation apparatus may be such that an air supply section that includes the air supply blower 12 in the supply air passage 115 and an air discharge section that includes the exhaust blower 13 in the exhaust air passage 116 are integrated in the single housing 11, as described above or are configured as separate bodies. In other words, each of the ventilation apparatuses 1 and 1A may include a housing that houses the air supply section and a housing that houses the air discharge section. In that case, each of the ventilation apparatuses 1 and 1A can be regarded as an exhaust system, with the air supply section being an air supply device and with the air discharge section being an air discharge device.

The above configurations illustrated in the embodiments are illustrative, can be combined with other techniques that are publicly known, and can be partly omitted or changed without departing from the gist. The embodiments can be combined with each other.

### Reference Signs List

1, 1A ventilation apparatus; 11 housing; 12 air supply blower; 12a air supply motor; 13 exhaust blower; 13a exhaust motor; 14 heat exchange element; 15 supply air filter; 16 exhaust air filter; 17 carbon dioxide sensor; 18 remote controller (remote); 19 control unit; 31 communication line; 51 room; 52 ceiling space; 53 ceiling; 111 outdoor-air inlet; 112 exhaust air outlet; 113 supply air outlet; 114 indoor-air inlet; 115 supply air passage; 115a pre-heat exchange outdoor-air passage; 115b post-heat exchange outdoor-air passage; 115c in-element supply air passage; 116 exhaust air passage; 116a pre-heat exchange indoor-air passage; 116b post-heat exchange indoor-air passage; 116c in-element exhaust air passage; 117a, 117b, 117c, 117d partition wall; 118 air passage switching damper; 141 sheet member; 142, 142a, 142b spacing member; 191 air quality information acquisition unit; 192 air flow rate setting information storage unit; 193 operation control unit.

## Claims

1. A ventilation apparatus comprising:
a supply air passage to allow a current of supply air to pass as a current of outdoor air in a direction of a room;
an exhaust air passage to allow a current of exhaust air to pass outdoors as a current of air from the room;
an air supply blower installed in the supply air passage;
an exhaust blower installed in the exhaust air passage;
an air quality sensor to detect air quality indicative of how much indoor air is polluted; and
a control unit to control air flow rates for the air supply blower and the exhaust blower, wherein
upon receipt of an externally set instruction for an operation based on an air flow differential that is information indicating a difference between a specified supply air flow rate as a specified air flow rate for the air supply blower and a specified exhaust air flow rate as a specified air flow rate for the exhaust blower, for a first blower that is either the air supply blower or the exhaust blower, the control unit obtains a first air flow rate corresponding to an air quality level detected by the air quality sensor from air flow rate setting information establishing a relationship between the air quality level and the air flow rates and controls the first blower at the first air flow rate, and for a second blower different from the first blower, the control unit computes a second air flow rate by use of the first air flow rate for the first blower and the air flow differential and controls the second blower at the second air flow rate.

2. The ventilation apparatus according to claim 1, wherein the air flow differential is either a difference that is the specified supply air flow rate minus the specified exhaust air flow rate or a difference that is the specified exhaust air flow rate minus the specified supply air flow rate.

3. The ventilation apparatus according to claim 1, wherein the air flow differential is either a ratio of the specified exhaust air flow rate to the specified supply air flow rate or a ratio of the specified supply air flow rate to the specified exhaust air flow rate.

4. The ventilation apparatus according to any one of claims 1 to 3, wherein the air quality sensor includes at least one sensor selected from the group consisting of a carbon dioxide sensor, a dust sensor, a volatile organic compound gas sensor, an odor sensor, a carbon monoxide sensor, and an occupancy sensor.

5. The ventilation apparatus according to any one of claims 1 to 4, wherein when either the first blower or the second blower reaches a lower-limit air flow rate, the control unit performs control that causes another blower to reach a lower-limit air flow rate without maintaining the air flow differential.

6. The ventilation apparatus according to any one of claims 1 to 5, wherein the air quality sensor is installed in the exhaust air passage.

7. The ventilation apparatus according to any one of claims 1 to 5, wherein the air quality sensor is installed in the room.

8. The ventilation apparatus according to any one of claims 1 to 7, further comprising a housing including an air supply section including the air supply blower in the supply air passage and an air discharge section including the exhaust blower in the exhaust air passage.

9. The ventilation apparatus according to claim 8, further comprising a heat exchange element that performs heat exchange between supply air flowing through the supply air passage and exhaust air flowing through the exhaust air passage.

10. The ventilation apparatus according to any one of claims 1 to 7, wherein an air supply section including the air supply blower in the supply air passage and an air discharge section including the exhaust blower in the exhaust air passage are configured as separate bodies.
